# EUROPEAN PATENT APPLICATION

(11) **EP 4 488 010 A1**
(43) Date of publication of application: **08.01.2025**
(21) Application number: 23183546.3
(22) Date of filing: 05.07.2023
(51) Int. Cl.: B25J 9/10, B25J 17/02, B25J 19/00

(54) **ROBOTIC ARM**

(71) Applicant: Kassow Robots ApS, 2770 Kastrup (DK)
(72) Inventor: KASSOW, Kristian, 2300 Copenhagen S (DK)
(74) Representative: COPA Copenhagen Patents

(57) **Abstract**

The present invention relates to a robot comprising a robotic arm comprising a plurality of joints including a first joint and a second joint, and a plurality of motor assemblies including a first motor assembly and a second motor assembly, and a plurality of circuitries including a first circuitry for controlling the motors of the first and second motor assemblies. Each of the first and second motor assemblies extends along an axis between an output end and a housing end and is configured to cause movement of a joint with respect to an axis by relative movement between the output end and the housing end. The motor assembly comprises a first motor connected to a first gear. The first circuitry is arranged between the first joint and the second joint within the robotic arm and is connected to the motors of the first and second motor assemblies by wires. The first motor assembly is arranged with the output end towards the first circuitry and comprises a first passage extending from the first housing end to the first output end along the first axis and the first wires are extending through the passage of the first motor assembly.

## Description

The present disclosure relates to a robot comprising a robotic arm.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is desirous to facilitate simplified and more compact robot solutions which are easy to manufacture. Furthermore, easy access to the electronics/motor assemblies of the robotic arm would be advantageous.

### SUMMARY

It is an object of the present disclosure at least to provide improvements of the prior art and/or to solve or reduce problems known from the prior art. It is a further object of the present disclosure to provide advantageous or at least an alternative robot, robotic arm, and/or components thereof.

More particularly, the present disclosure provides a solution which provides a more simple and compact design with fewer components and a reduced risk of overheating. The components of the robotic arm are easy to manufacture, Furthermore, the present solution also aids an operator in accessing the electronics/motor assembly more easily. This will allow the operator to set up and repair the robot more easily, which saves costs and reduces the risk of a faulty set-up.

Accordingly, a robot is disclosed. The robot comprises a robotic arm. The robot may further comprise a control unit. The robotic arm extends between a base end and a tool end. The robotic arm may comprise a base at the base end. The base may be fixed to a structure to which the robot is to be fastened. The structure may be a factory floor or another structure from which the robotic arm is meant to work. The robotic arm may be configured for coupling with a tool at the tool end. For example, the robotic arm may comprise a tool flange, e.g. for connecting the tool, at the tool end.

The control unit may be adapted to be arranged at the base end of the robotic arm. For example, the control unit may be adapted to form part of the base of the robotic arm. The control unit may be adapted to be arranged between the robotic arm and a structure to which the robotic arm is to be fastened.

The robotic arm comprises a plurality of joints between the base end and the tool end. The robotic arm may further comprise a plurality of rigid members connecting the joints between the base end and the tool end.

The plurality of joints includes a first joint and a second joint. Optionally, the plurality of joints further comprises one or more of a third joint, a fourth joint, a fifth joint, a sixth joint and a seventh joint.

The first joint is positioned between the base end and the second joint. The second joint is positioned between the first joint and the tool end. If the robotic arm comprises more than two joints, these are positioned between the second joint and the tool end.

If the robotic arm comprises a third joint and a fourth joint, the third joint is positioned between the second joint and the fourth joint, and the fourth joint is positioned between the third joint and the tool end. If the robotic arm comprises more than four joints, these are positioned between the fourth joint and the tool end.

If the robotic arm further comprises a fifth joint and a sixth joint, the fifth joint is positioned between the fourth joint and the sixth joint, and the sixth joint is positioned between the fifth joint and the tool end.

If the robotic arm further comprises a seventh joint, the seventh joint is positioned between the sixth joint and the tool end.

Preferably, the robotic arm comprises seven joints. If the robotic arm is a seventh-joint robot, the plurality of joints includes the first joint, the second joint, the third joint, the fourth joint, the fifth joint, the sixth joint and the seventh joint. In that case, the first joint is positioned between the base end and the second joint. The second joint is positioned between the first joint and the third joint. The third joint is positioned between the second joint and the fourth joint. The fourth joint is positioned between the third joint and the fifth joint. The sixth joint is positioned between the fifth joint and the seventh joint, and the seventh joint is positioned between the sixth joint and the tool end.

The plurality of rigid members connects the joints between the base end and the tool end. The plurality of rigid members may form an external skin of the robotic arm. The plurality of rigid members may enclose motor assemblies and circuitries. The plurality of rigid members may include the base and a first rigid member, and optionally one or more of a second rigid member, a third rigid member, a fourth rigid member, a fifth rigid member, and a sixth rigid member.

The base may extend between the base end and the first joint. The first rigid member may extend between the first joint and the second joint. The second rigid member may extend between the second joint and the third joint. The third rigid member may extend between the third joint and the fourth joint. The fourth rigid member may extend between the fourth joint and the fifth joint. The fifth rigid member may extend between the fifth joint and the sixth joint. The sixth rigid member may extend between the sixth joint and the seventh joint.

The base may connect the base end with the first joint. The first rigid member may connect the first joint with the second joint. The second rigid member may connect the second joint with the third joint. The third rigid member may connect the third joint with the fourth joint. The fourth rigid member may connect the fourth joint with the fifth joint. The fifth rigid member may connect the fifth joint with the sixth joint. The sixth rigid member may connect the sixth joint with the seventh joint. As a result, motion of a joint may cause relative motion between adjacent rigid members.

For example, motion of the first joint may cause relative motion between the base and the first rigid member, e.g. with respect to a first axis. Motion of the second joint may cause relative motion between the first rigid member and the second rigid member, e.g. with respect to a second axis. Motion of the third joint may cause relative motion between the second rigid member and the third rigid member, e.g. with respect to a third axis. Motion of the fourth joint may cause relative motion between the third rigid member and the fourth rigid member, e.g. with respect to a fourth axis. Motion of the fifth joint may cause relative motion between the fourth rigid member and the fifth rigid member, e.g. with respect to a fifth axis. Motion of the sixth joint may cause relative motion between the fifth rigid member and the sixth rigid member, e.g. with respect to a sixth axis. Motion of the seventh joint may cause relative motion between the sixth rigid member and the tool end, e.g. with respect to a seventh axis.

The robotic arm comprises a plurality of motor assemblies configured to cause movement of the robotic arm with respect to a plurality of axes, e.g. including one or more of the first axis, second axis, third axis, fourth axis, fifth axis, sixth axis and seventh axis. The plurality of rigid members may enclose the plurality of motor assemblies. The plurality of motor assemblies includes a first motor assembly and a second motor assembly, and optionally one or more of a third motor assembly, a fourth motor assembly, a fifth motor assembly, a sixth motor assembly and a seventh motor assembly.

The first motor assembly is configured to cause movement of the first joint with respect to the first axis. The second motor assembly is configured to cause movement of the second joint with respect to the second axis. The third motor assembly may be configured to cause movement of the third joint with respect to the third axis. The fourth motor assembly may be configured to cause movement of the fourth joint with respect to the fourth axis. The fifth motor assembly may be configured to cause movement of the fifth joint with respect to the fifth axis. The sixth motor assembly may be configured to cause movement of the sixth joint with respect to the sixth axis. The seventh motor assembly may be configured to cause movement of the seventh joint with respect to the seventh axis.

Preferably, a motor assembly according to the present invention comprises a motor connected to a gear. Furthermore, a motor assembly according to the present invention preferably extends along an axis between an output end and a housing end of the motor assembly. The first motor assembly comprises a first motor connected to a first gear and extends along the first axis between a first output end and a first housing end. The second motor assembly comprises a second motor connected to a second gear and extends along the second axis between a second output end and a second housing end. The third motor assembly may comprise a third motor connected to a third gear and may extend along the third axis between a third output end and a third housing end. The fourth motor assembly may comprise a fourth motor connected to a fourth gear and may extend along the fourth axis between a fourth output end and a fourth housing end. The fifth motor assembly may comprise a fifth motor connected to a fifth gear and may extend along the fifth axis between a fifth output end and a fifth housing end. The sixth motor assembly may comprise a sixth motor connected to a sixth gear and may extend along the sixth axis between a sixth output end and a sixth housing end. The seventh motor assembly may comprise a seventh motor connected to a seventh gear and may extend along the seventh axis between a seventh output end and a seventh housing end. The gear, such as the first gear, the second gear, the third, gear, the fourth gear, the fifth gear, the sixth gear and/or the seventh gear may be a strain wave gear, e.g. comprising a wave generator and a flexspline, e.g. wherein the wave generator is rotated by motor, such as an axle of the motor (e.g. the hollow axle as described further below).

Preferably, each motor assembly is configured to cause movement of a joint with respect to an axis by relative movement between the output end and the housing end of the motor assembly. The first motor assembly is configured to cause movement of the first joint with respect to the first axis by relative movement between the first output end and the first housing end. The second motor assembly is configured to cause movement of the second joint with respect to the second axis by relative movement between the second output end and the second housing end. The third motor assembly may be configured to cause movement of the third joint with respect to the third axis by relative movement between the third output end and the third housing end. The fourth motor assembly may be configured to cause movement of the fourth joint with respect to the fourth axis by relative movement between the fourth output end and the fourth housing end. The fifth motor assembly may be configured to cause movement of the fifth joint with respect to the fifth axis by relative movement between the fifth output end and the fifth housing end. The sixth motor assembly may be configured to cause movement of the sixth joint with respect to the sixth axis by relative movement between the sixth output end and the sixth housing end. The seventh motor assembly may be configured to cause movement of the seventh joint with respect to the seventh axis by relative movement between the seventh output end and the seventh housing end.

Preferably, one or more of the motor assemblies also comprise a passage extending from the housing end to the output end along the axis. One or more of the motors of the motor assemblies comprise a hollow axle extending through the motor. The inside of the hollow axle may form part of the passage extending through the motor assembly. The motor may be connected to the gear at least through the hollow axle extending through the motor.

The first motor assembly comprises a first passage extending from the first housing end to the first output end along the first axis. The first motor may comprise a first hollow axle extending through the first motor along the first axis. The inside of the first hollow axle may form part of the first passage extending through the first motor assembly. The first motor may be connected to the first gear at least through the first hollow axle. The second motor assembly may comprise a second passage extending from the second housing end to the second output end along the second axis. The second motor may comprise a second hollow axle extending through the second motor along the second axis. The inside of the second hollow axle may form part of the second passage extending through the second motor assembly. The second motor may be connected to the second gear at least through the second hollow axle. The third motor assembly may comprise a third passage extending from the third housing end to the third output end along the third axis. The third motor may comprise a third hollow axle extending through the third motor along the third axis. The inside of the third hollow axle may form part of the third passage extending through the third motor assembly. The third motor may be connected to the third gear at least through the third hollow axle. The fourth motor assembly may comprise a fourth passage extending from the fourth housing end to the fourth output end along the fourth axis. The fourth motor may comprise a fourth hollow axle extending through the fourth motor along the fourth axis. The inside of the fourth hollow axle may form part of the fourth passage extending through the fourth motor assembly. The fourth motor may be connected to the fourth gear at least through the fourth hollow axle. The fifth motor assembly may comprise a fifth passage extending from the fifth housing end to the fifth output end along the fifth axis. The fifth motor may comprise a fifth hollow axle extending through the fifth motor along the fifth axis. The inside of the fifth hollow axle may form part of the fifth passage extending through the fifth motor assembly. The fifth motor may be connected to the fifth gear at least through the fifth hollow axle. The sixth motor assembly may comprise a sixth passage extending from the sixth housing end to the sixth output end along the sixth axis. The sixth motor may comprise a sixth hollow axle extending through the sixth motor along the sixth axis. The inside of the sixth hollow axle may form part of the sixth passage extending through the sixth motor assembly. The sixth motor may be connected to the sixth gear at least through the sixth hollow axle. The seventh motor assembly may comprise a seventh passage extending from the seventh housing end to the seventh output end along the seventh axis. The seventh motor may comprise a seventh hollow axle extending through the seventh motor along the seventh axis. The inside of the seventh hollow axle may form part of the seventh passage extending through the seventh motor assembly. The seventh motor may be connected to the seventh gear at least through the seventh hollow axle.

Preferably, one or more of the motor assemblies comprise an output part and a housing part. The output part may be connected to the gear. The output part may comprise the output end as well as means for connecting the output part to a rigid member. The housing part may surround the motor and the gear. The housing part may comprise the housing end.

The first motor assembly may comprise a first output part and a first housing part. The first output part may be connected to the first gear. The first output part may comprise the first output end and means for connecting the first output part to a rigid member, such as the first rigid member. The first housing part may surround the first motor and the first gear. The first housing part may comprise the first housing end. The second motor assembly may comprise a second output part and a second housing part. The second output part may be connected to the second gear. The second output part may comprise the second output end and means for connecting the second output part to a rigid member, such as the first rigid member. The second housing part may surround the second motor and the second gear. The second housing part may comprise the second housing end. The third motor assembly may comprise a third output part and a third housing part. The third output part may be connected to the third gear. The third output part may comprise the third output end and means for connecting the third output part to a rigid member, such as the third rigid member. The third housing part may surround the third motor and the third gear. The third housing part may comprise the third housing end. The fourth motor assembly may comprise a fourth output part and a fourth housing part. The fourth output part may be connected to the fourth gear and may comprise the fourth output end and means for connecting the fourth output part to a rigid member, such as the third rigid member. The fourth housing part may surround the fourth motor and the fourth gear. The fourth housing part may comprise the fourth housing end. The fifth motor assembly may comprise a fifth output part and a fifth housing part. The fifth output part may be connected to the fifth gear. The fifth motor assembly may comprise the fifth output end and means for connecting the fifth output part to a rigid member, such as the fifth rigid member. The fifth housing part may surround the fifth motor and the fifth gear. The fifth housing part may comprise the fifth housing end. The sixth motor assembly may comprise a sixth output part and a sixth housing part. The sixth output part may be connected to the sixth gear. The sixth output part may comprise the sixth output end and means for connecting the sixth output part to a rigid member, such as the sixth rigid member. The sixth housing part may surround the sixth motor and the sixth gear. The sixth housing part may comprise the sixth housing end. The seventh motor assembly may comprise a seventh output part and a seventh housing part. The seventh output part may be connected to the seventh gear. The seventh output part may comprise the seventh output end and may form the tool end, such as a tool flange. The seventh housing part may surround the seventh motor and the seventh gear. The seventh housing part may comprise the seventh housing end.

The plurality of motor assemblies may be configured to cause movement of a joint with respect to an axis by relative movement between the output part and the housing part. Preferably, the motor is arranged at the first housing end, and the gear is arranged at the first output end. Preferably, the motor is not arranged at the output end, and the gear is not arranged at the housing end. The motor may be arranged more proximal to the housing end than the gear, and the gear may be arranged more proximal to the output end than the motor.

The first motor assembly may be configured to cause movement of the first joint with respect to the first axis by relative movement between the first output part and the first housing part. The first motor may be arranged at the first housing end and the first gear may be arranged at the first output end. Preferably, the first motor is not arranged at the first output end, and the first gear is not arranged at the first housing end. The first motor may be arranged more proximal to the first housing end than the first gear, and the first gear may be arranged more proximal to the first output end than the first motor. The second motor assembly may be configured to cause movement of the second joint with respect to the second axis by relative movement between the second output part and the second housing part. The second motor may be arranged at the second housing end, and the second gear may be arranged at the second output end. Preferably, the second motor is not arranged at the second output end, and the second gear is not arranged at the second housing end. The second motor may be arranged more proximal to the second housing end than the second gear, and the second gear may be arranged more proximal to the second output end than the second motor. The third motor assembly may be configured to cause movement of the third joint with respect to the third axis by relative movement between the third output part and the third housing part. The third motor may be arranged at the third housing end and the third gear may be arranged at the third output end. Preferably, the third motor is not arranged at the third output end, and the third gear is not arranged at the third housing end. The third motor may be arranged more proximal to the third housing end than the third gear and the third gear may be arranged more proximal to the third output end than the third motor. The fourth motor assembly may be configured to cause movement of the fourth joint with respect to the fourth axis by relative movement between the fourth output part and the fourth housing part. The fourth motor may be arranged at the fourth housing end and the fourth gear may be arranged at the fourth output end. Preferably, the fourth motor is not arranged at the fourth output end, and the fourth gear is not arranged at the fourth housing end. The fourth motor may be arranged more proximal to the fourth housing end than the fourth gear, and the fourth gear may be arranged more proximal to the fourth output end than the fourth motor. The fifth motor assembly may be configured to cause movement of the fifth joint with respect to the fifth axis by relative movement between the fifth output part and the fifth housing part. The fifth motor may be arranged at the fifth housing end, and the fifth gear may be arranged at the fifth output end. Preferably, the fifth motor is not arranged at the fifth output end, and the fifth gear is not arranged at the fifth housing end. The fifth motor may be arranged more proximal to the fifth housing end than the fifth gear, and the fifth gear may be arranged more proximal to the fifth output end than the fifth motor. The sixth motor assembly may be configured to cause movement of the sixth joint with respect to the sixth axis by relative movement between the sixth output part and the sixth housing part. The sixth motor may be arranged at the sixth housing end, and the sixth gear may be arranged at the sixth output end. Preferably, the sixth motor is not arranged at the sixth output end, and the sixth gear is not arranged at the sixth housing end. The sixth motor may be arranged more proximal to the sixth housing end than the sixth gear, and the sixth gear may be arranged more proximal to the sixth output end than the sixth motor. The seventh motor assembly may be configured to cause movement of the seventh joint with respect to the seventh axis by relative movement between the seventh output part and the seventh housing part. The seventh motor may be arranged at the seventh housing end, and the seventh gear may be arranged at the seventh output end. Preferably, the seventh motor is not arranged at the seventh output end, and the seventh gear is not arranged at the seventh housing end. The seventh motor may be arranged more proximal to the seventh housing end than the seventh gear, and the seventh gear may be arranged more proximal to the seventh output end than the seventh motor.

The robotic arm comprises a number of circuitries for controlling the plurality of motors of the motor assemblies. The plurality of rigid members may enclose the number of circuitries. The number of circuitries includes a first circuitry, and optionally one or more of a second circuitry, a third circuitry and a fourth circuitry.

The first circuitry is arranged between the first joint and the second joint within the robotic arm. The first circuitry may be arranged within the first rigid member. The first circuitry is configured for controlling the first and second motors. The first circuitry is connected to the first motor by first wires and to the second motor by second wires. The first motor assembly is arranged with the first output end towards the first circuitry, and the first wires extending through the first passage of the first motor assembly. The first gear may be arranged between the first circuitry and the first motor. The second motor assembly may be arranged with the second output end towards the first circuitry, and the second wires may be extending through the second passage of the second motor assembly. The second gear may be arranged between the first circuitry and the second motor. The second circuitry may be arranged between the third joint and the fourth joint within the robotic arm. The second circuitry may be arranged within the third rigid member. The second circuitry may be configured for controlling the third and fourth motors. The second circuitry may be connected to the third motor by third wires and to the fourth motor by fourth wires. The third motor assembly may be arranged with the third output end towards the second circuitry, and the third wires may be extending through the third passage of the third motor assembly. The third gear may be arranged between the second circuitry and the third motor. The fourth motor assembly may be arranged with the fourth output end towards the second circuitry, and the fourth wires may extend through the fourth passage of the fourth motor assembly. The fourth gear may be arranged between the second circuitry and the fourth motor. The third circuitry may be arranged between the fifth joint and the sixth joint within the robotic arm. The third circuitry may be arranged within the fifth rigid member. The third circuitry may be configured for controlling the fifth and sixth motors, and optionally also the seventh motor. The third circuitry may be connected to the fifth motor by fifth wires, to the sixth motor by sixth wires, and optionally also to the seventh motor by seventh wires. The fifth motor assembly may be arranged with the fifth output end towards the third circuitry, and the fifth wires may extend through the fifth passage of the fifth motor assembly. The fifth gear may be arranged between the third circuitry and the fifth motor. The sixth motor assembly may be arranged with the sixth output end towards the third circuitry, and the sixth wires may extend through the sixth passage of the sixth motor assembly, or the sixth motor assembly may be arranged with the sixth housing end towards the third circuitry. The sixth gear may be arranged between the third circuitry and the sixth motor, or the sixth motor may be arranged between the third circuitry and the sixth gear. The seventh motor assembly may be arranged with the seventh output end towards the tool end. The fourth circuitry may be arranged between the sixth and the seventh joint within the robotic arm or between the seventh joint and the tool end within the robotic arm. The fourth circuitry may be arranged within the sixth rigid member. The fourth circuitry may be configured for controlling the seventh motor and optionally also a tool interface at the tool end. The seventh motor assembly may be arranged with the seventh output end towards the fourth circuitry, and the seventh wires may extend through the first passage of the seventh motor assembly, or the seventh motor assembly may be arranged with the seventh housing end towards the fourth circuitry. The seventh gear may be arranged between the fourth circuitry and the seventh motor, or the seventh motor may be arranged between the fourth circuitry and the seventh gear.

Preferably, the number of circuitries is single circuitry units, such as PCBs. One or more of the number of circuitries comprises two processing units. However, one or more of the number of circuitries may also comprise only one processing unit, or even three processing units.

The first circuitry may comprise two processing units including a first processing unit and a second processing unit. The first processing unit may be configured for controlling the first motor assembly. The second processing unit may be configured for controlling the second motor assembly. The second circuitry may comprise two processing units including a third processing unit and a fourth processing unit. The third processing unit may be configured for controlling the third motor assembly. The fourth processing unit may be configured for controlling the fourth motor assembly. The third circuitry may comprise two processing units including a fifth processing unit and a sixth processing unit, or the third circuitry may comprise three processing units including the fifth processing unit and the sixth processing unit and further comprising a seventh processing unit. The fifth processing unit may be configured for controlling the fifth motor assembly. The sixth processing unit may be configured for controlling the sixth motor assembly. The seventh processing unit may be configured for controlling the seventh motor assembly. Alternatively, the fourth circuitry may comprise the seventh processing unit. The fourth circuitry may also comprise two processing units including the seventh processing unit and an eighth processing unit. The eighth processing unit may be configured for controlling a tool interface at the tool end.

Because the one or more circuitries of the robot according to the invention comprise several processing units, one circuitry is capable of controlling several motors. Thereby, the circuitry necessary to realise the robot may be reduced. Conventionally, a seven-joint robot would need seven circuitries for controlling each of the seven motors. However, in accordance with the present invention the number of circuitries can be reduced, e.g. to four or even to three circuitries. Thereby, providing for a simpler robot with a reduced number of components.

The first motor assembly may be arranged such that the first circuitry is closer to the first gear than to the first motor. The first gear may be arranged between the first circuitry and the first motor. The first motor assembly, such as the first output part, may comprise a first main bearing. The second motor assembly may be arranged such that the first circuitry is closer to the second gear than to the second motor. Alternatively, the second motor assembly may be arranged such that the first circuitry is closer to the second motor than to the second gear. The second gear may be arranged between the first circuitry and the second motor. The second motor assembly, such as the second output part, may comprise a second main bearing. The third motor assembly may be arranged such that the second circuitry is closer to the third gear than to the third motor. Alternatively, the third motor assembly may be arranged such that the second circuitry is closer to the third motor than to the third gear. The third gear may be arranged between the second circuitry and the third motor. The third motor assembly, such as the third output part, may comprise a third main bearing. The fourth motor assembly may be arranged such that the second circuitry is closer to the fourth motor than to the first gear. The fourth motor assembly may be arranged such that the second circuitry is closer to the fourth gear than to the fourth motor. Alternatively, the fourth gear may be arranged between the second circuitry and the fourth motor. The fourth gear may be arranged between the second circuitry and the fourth motor. The fourth motor assembly, such as the fourth output part, may comprise a fourth main bearing. The fifth motor assembly may be arranged such that the third circuitry is closer to the fifth gear than to the fifth motor. Alternatively, the fifth motor assembly may be arranged such that the third circuitry is closer to the fifth motor than to the fifth gear. The fifth gear may be arranged between the third circuitry and the fifth motor. The fifth motor assembly, such as the fifth output part, may comprise a fifth main bearing. The sixth motor assembly may be arranged such that the third circuitry is closer to the sixth gear than to the sixth motor. Alternatively, the sixth motor assembly may be arranged such that the third circuitry is closer to the sixth motor than to the sixth gear. The sixth gear may be arranged between the third circuitry and the sixth motor. The sixth motor assembly, such as the sixth output part, may comprise a sixth main bearing. The seventh motor assembly may be arranged such that the third circuitry is closer to the seventh motor than to the seventh gear. Alternatively, the seventh motor assembly may be arranged such that the fourth circuitry is closer to the seventh motor than to the seventh gear. The seventh gear may be arranged between the third circuitry and the seventh motor, or the seventh gear may be arranged between the fourth circuitry and the seventh motor. The seventh motor assembly, such as the seventh output part, may comprise a seventh main bearing.

The robotic arm may further comprise a number of access openings to allow access to one or more circuitries and/or motor assemblies within the rigid members of the robotic arm. Such access openings may be used by operators to set up and repair the circuitries and/or motor assemblies of the robotic arm. The number of access openings includes a first access opening, and optionally, one or more of a second access opening, a third access opening, and a fourth access opening.

The first access opening may be arranged in the first rigid member, such as in the external skin of the first rigid member. The first access opening may be configured to allow access to the first circuitry. The second access opening may be arranged in the third rigid member, such as in the external skin of the third rigid member. The second access opening may be configured to allow access to the second circuitry. The third access opening may be arranged in the fifth rigid member, such as in the external skin of the fifth rigid member. The third access opening may be configured to allow access to the third circuitry. The fourth access opening may be arranged in the sixth rigid member, such as in the external skin of the sixth rigid member. The fourth access opening may be configured to allow access to the fourth circuitry.

Because the number of circuitries necessary to realise the robotic arm is reduced in accordance with the present invention, the number of access openings necessary for allowing access to the circuitries and/or motor assemblies for installation and inspection by operators may also be reduced compared to the prior art. Instead of requiring seven access openings, one for each circuitry, only three or four access openings are necessary. Furthermore, access openings may be provided in the rigid members most suitable and may be dispensed with in rigid members less suitable for providing access openings. For example, the second rigid member and/or the fourth rigid member may be less suitable for providing access openings due to their geometry and that they may be extruded elements rather than moulded elements.

Also, the arrangement of the motor assemblies within the rigid members with the output ends of the motor assemblies facing a circuitry and the housing end facing away from the circuitry allows for a more compact robotic arm, because the rigid members comprising the circuitries can be made shorter.

The first housing part of the first motor assembly may be fixed to the base of the robotic arm and the first output part of the first motor assembly may be fixed to the first rigid member of the robotic arm such that relative movement between the first housing part and the first output part cause relative motion between the base and the first rigid member. The second housing part of the second motor assembly may be fixed to the second rigid member of the robotic arm and the second output part of the second motor assembly may be fixed to the first rigid member of the robotic arm, such that relative movement between the second housing part and the second output part cause relative motion between the first rigid member and the second rigid member. The third housing part of the third motor assembly may be fixed to the second rigid member of the robotic arm, and the third output part of the third motor assembly may be fixed to the third rigid member of the robotic arm such that relative movement between the third housing part and the third output part cause relative motion between the second rigid member and the third rigid member. The fourth housing part of the fourth motor assembly may be fixed to the fourth rigid member of the robotic arm and the fourth output part of the fourth motor assembly may be fixed to the third rigid member of the robotic arm, such that relative movement between the fourth housing part and the fourth output part cause relative motion between the third rigid member and the fourth rigid member. The fifth housing part of the fifth motor assembly may be fixed to the fourth rigid member of the robotic arm, and the fifth output part of the fifth motor assembly may be fixed to the fifth rigid member of the robotic arm such that relative movement between the fifth housing part and the fifth output part cause relative motion between the fourth rigid member and the fifth rigid member. The sixth housing part of the sixth motor assembly may be fixed to the fifth or sixth rigid member of the robotic arm, and the sixth output part of the sixth motor assembly may be fixed to the other of the fifth or sixth rigid member of the robotic arm such that relative movement between the sixth housing part and the sixth output part cause relative motion between the fifth rigid member and the sixth rigid member. The seventh housing part of the seventh motor assembly may be fixed to the sixth rigid member of the robotic arm, and the seventh output part may be fixed to the tool end of the robotic arm such that relative movement between the seventh housing part and the seventh output part cause relative motion between the sixth rigid member and the tool end of the robotic arm.

One or more of the rigid members may comprise a cylindrical section. The cylindrical sections are preferably made by an extrusion process, since this is an easy and cheap manufacturing method. One disadvantage of the extrusion process is that, if access openings are required in the cylindrical sections, such openings would need to be made in an additional step post extrusion. Furthermore, providing an opening in the side of a cylindrical rigid member may further risk compromising strength of the cylindrical element. One or more of the rigid members may comprise a moulded section. The moulded sections are made by a moulding process. An advantage of the moulding process is that more complex shapes can be made, e.g. including access openings, even though the process may be more expensive. One or more of the rigid members may comprise a cylindrical section connected to a moulded section.

Preferably, the second rigid member comprises a cylindrical section and optionally also a moulded section. Preferably, the fourth rigid member comprises a cylindrical section and optionally also a moulded section. The first and third rigid members preferably consist of a moulded section.

Due to the arrangement of the circuitries within the robotic arm according to the present invention, it is possible to make all the access openings of the robotic arm in the moulded sections of the rigid members, whereby no access openings have to be made in cylindrical sections. This is advantageous, as the extruded parts are more difficult to customize than the moulded parts. Thus, making the overall manufacturing process simpler and cheaper.

Some of the rigid members may be longer than other rigid members, and some of the rigid members may be shorter than other rigid members. The circuitries are preferably contained within shorter rigid members, while at least some of the rigid members between circuitries are larger. Preferably, the second rigid member is longer than the first rigid member and the third rigid member. Also, the fourth rigid member is preferably longer than the third rigid member and the fifth rigid member, and optionally longer than the sixth rigid member.

The motors of the motor assemblies produce and release heat to the surroundings when in use. Since the motors are arranged at respective housing ends of the motor assemblies, heat is primarily released at the housing ends/housing parts of the motor assemblies. Thus, it is preferred that the motor assemblies adjacent to the second or fourth rigid members are arranged such that their housing ends face towards the second or fourth rigid member. In this way, heat formed at the motor assemblies is primarily led into the material of the second or fourth rigid members, i.e. into the longer rigid members, thereby providing an increased transfer of heat from the motor assemblies to the surroundings of the robot. Thus, the risk of overheating is reduced.

Motor assemblies arranged adjacent to the second or fourth rigid members include the second motor assembly, the third motor assembly, the fourth motor assembly and the fifth motor assembly. Thus, preferably, the second motor assembly, the third motor assembly, the fourth motor assembly and the fifth motor assembly are arranged such that their housing ends face towards either the second or fourth rigid member. By "face towards" is not meant that the housing end should be pointed directly towards the second or fourth rigid members, but merely that the motor assemblies are arranged such that heat will primarily be led to the second and fourth rigid members instead of to adjacent rigid members comprising the circuitries.

As also mentioned above, the robot may comprise a control unit. The control unit may be communicably connected to the plurality of circuitries and configured for controlling the robotic arm. The control unit may determine one or more operational parameters for the plurality of motor assemblies so as to let the robotic arm perform a desired movement or task, wherein the operational parameters may include torque and/or angular velocity and/or angular acceleration for each of the plurality of motor assemblies. The plurality of motor assemblies may be configured to receive control signals from the control unit, through the plurality of circuitries, which determines the desired position or motion of each joint by controlling the rotation of the motor in the motor assemblies.

To be able to determine the position of the joints of the robotic arm, position feedback devices or sensors may be incorporated into the motor assemblies and connected to the control unit. These position feedback devices or sensors provide information about the joint angles or positions to the control unit through the plurality of circuitries. The position feedback sensors may include encoders, potentiometers, hall effect sensors, etc.

Wires for connecting the motors of the motor assemblies to the circuities are necessary. Thus, the arrangement of the motor assemblies within the rigid members as described above may not seem advantageous, since it would appear difficult to connect the motors and circuitries by wires with this arrangement. However, by using motor assemblies comprising hollow axles extending through the motor assemblies, the wires can be guided through the hollow axles and connected to the circuitries. In this way, the advantages of having the described arrangement of the motor assemblies can be achieved and has been found to outweigh the difficulty in having to route additional wires through the motor assemblies.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating a three-dimensional view of an exemplary seven-axis robot according to the invention,
Fig. 2 is a schematic diagram illustrating part an exemplary joint and a motor assembly within a robotic arm according to the invention,
Fig. 3 is a simple schematic diagram illustrating the external surface of the rigid members and joints of a seven-axis robot according to the invention,
Fig. 4 is a simple schematic diagram illustrating a preferred arrangement of the motor assemblies and circuitries within the seven-axis robot of fig. 3, and
Fig. 5 is a simple schematic diagram illustrating alternative arrangements of two motor assemblies connected to the same circuitry within a robotic arm.

### DETAILED DESCRIPTION

Various exemplary embodiments and details are described hereinafter with reference to the figures, when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

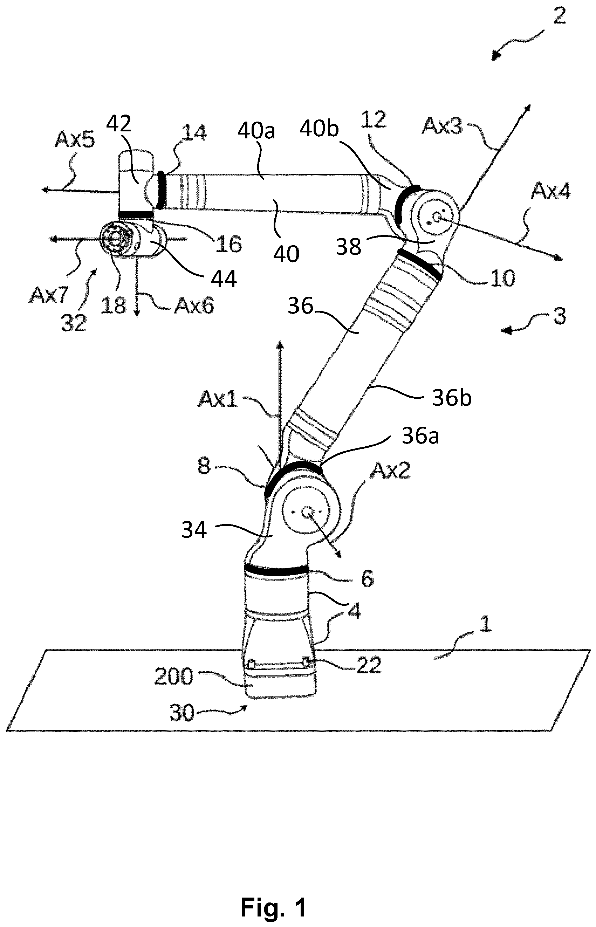

Fig. 1 is a schematic diagram illustrating a three-dimensional view of an exemplary robot 2 according to the present invention comprising a robotic arm 3 and a control unit 200, more particularly, a seven-axis robotic arm 3 and a control unit 200.

The robotic arm 3 extends between a base end 30 and a tool end 32 and comprises a base 4 at the base end 30. A tool flange for connection with a tool (not illustrated) may preferably be arranged at the tool end 32 of the robotic arm 3.

The robotic arm 3 comprises a plurality of joints 6, 8, 10, 12, 14, 16, 18 between the base end 30 and the tool end 32. The robotic arm further comprises a plurality of rigid members 4, 34, 36, 38, 40, 42 connecting the joints 6, 8, 10, 12, 14, 16, 18 between the base end 30 and the tool end 32.

In the illustrated example, the plurality of joints 6, 8, 10, 12, 14, 16, 18 includes seven joints, i.e., including a first joint 6, a second joint 8, a third joint 10, a fourth joint 12, a fifth joint 14, a sixth joint 16 and a seventh joint 18. However, in other examples, the robotic arm 3 may comprise fewer or more joints. For example, in another configuration, the robotic arm 3 may comprise only two joints, such as the first joint 6 and the second joint 8.

The first joint 6 is positioned between the base end 30 and the second joint 8. The second joint 8 is positioned between the first joint 6 and the third joint 10. The third joint 10 is positioned between the second joint 8 and the fourth joint 12. The fourth joint 12 is positioned between the third joint 10 and the fifth joint 14. The fifth joint 14 is positioned between the fourth joint 12 and the sixth joint 16. The sixth joint 16 is positioned between the fifth joint 14 and the seventh joint 18. The seventh joint 18 is positioned between the sixth joint 16 and the tool end 32.

The plurality of joints 6, 8, 10, 12, 14, 16, 18 is configured to cause movement of the robotic arm 3, e.g., movement of the tool end 32 relative to the base end 30. Each joint provides for rotation about a respective axis Ax1, Ax2, Ax3, Ax4, Ax5, Ax6, Ax7. The first joint 6 provides for rotation about a first axis Ax1. The second joint 8 provides for rotation about a second axis Ax2. The third joint 10 provides for rotation about a third axis Ax3. The fourth joint 12 provides for rotation about a fourth axis Ax4. The fifth joint 14 provides for rotation about a fifth axis Ax5. The sixth joint 16 provides for rotation about a sixth axis Ax6. The seventh joint 18 provides for rotation about a seventh axis Ax7.

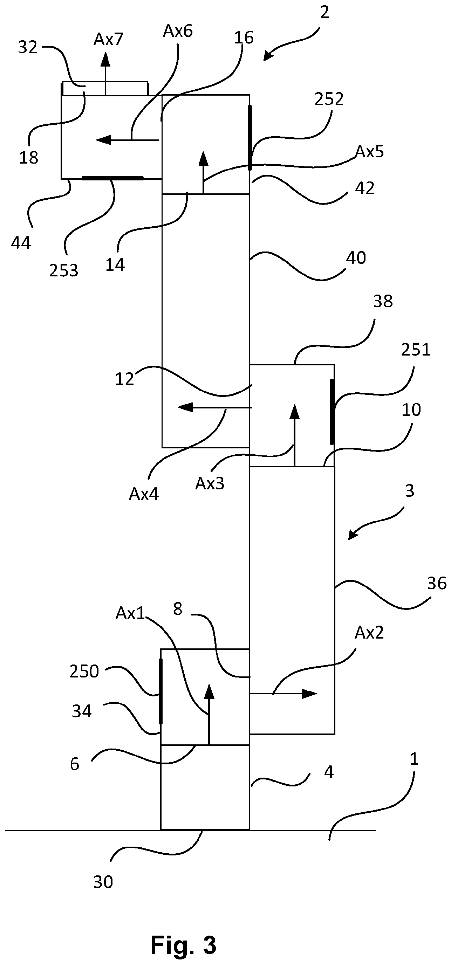

The robotic arm 3 may be placed in some configurations, where none of the seven axes Ax1-Ax7 are parallel. As illustrated, the second axis Ax2 may be non-parallel with the first axis Ax1. The third axis Ax3 may be non-parallel with the second axis Ax2. The fourth axis Ax4 may be non-parallel with the third axis Ax3. The fifth axis Ax5 may be non-parallel with the fourth axis Ax4. The sixth axis Ax6 may be non-parallel with the fifth axis Ax5. The seventh axis Ax7 may be non-parallel with the sixth axis Ax6. However, in some other configurations two or more of the seven axes Ax1-Ax7 may be parallel. For example, in fig. 3, which is a simplified schematic illustration of the seven-axis robot of fig. 1, the robotic arm is put in a configuration, where the first axis Ax1, the third axis Ax3, the fifth axis Ax5 and the seventh axis Ax7 are parallel. Furthermore, the second axis Ax2, the fourth axis Ax4 and that the sixth axis Ax6 are parallel.

In Fig. 1, the plurality of rigid members 4, 34, 36, 38, 40, 42 includes the base 4, a first rigid member 34, a second rigid member 36, a third rigid member 38, a fourth rigid member 40, a fifth rigid member 42 and a sixth rigid member 44.

The base 4 connects the base end 30 with the first joint 6. The first rigid member 34 connects the first joint 6 with the second joint 8. The second rigid member 36 connects the second joint 8 with a third joint 10. The third rigid member 40 connects the third joint 10 with the fourth joint 12. The fourth rigid member 40 connects the fourth joint 12 with the fifth joint 14. The fifth rigid member 42 connects the fifth joint 14 with a sixth joint 16. The sixth rigid member 44 connects the sixth joint 16 with the seventh joint 18.

As a result, motion of a joint 6, 8, 10, 12, 14, 16, 18 causes relative motion between adjacent rigid members 4, 34, 36, 38, 40, 42.

For example, motion of the first joint 6 causes relative motion between the base 4 and the first rigid member 34. Motion of the second joint 8 causes relative motion between the first rigid member 34 and the second rigid member 36. Motion of the third joint 10 causes relative motion between the second rigid member 36 and the third rigid member 38. Motion of the fourth joint 12 causes relative motion between the third rigid 38 member and the fourth rigid member 40. Motion of the fifth joint 14 causes relative motion between the fourth rigid member 40 and the fifth rigid member 42. Motion of the sixth joint 16 causes relative motion between the fifth rigid member 42 and the sixth rigid member 44. Motion of the seventh joint 18 causes relative motion between the sixth rigid member 44 and the tool end 32.

As illustrated in fig. 1, some of the rigid members 4, 34, 36, 38, 40, 42, including the base 4, the second rigid member 36, the fourth rigid member 40, the fifth rigid member 42 and the sixth rigid member 44, comprise a cylindrical section 36a, 40a, 42, 44. The cylindrical sections are preferably made by an extrusion process, since this is an easy and cheap manufacturing method. As illustrated in fig. 1, some of the rigid members, including the first rigid member 34, the second rigid member 36, the third rigid member 38 and the fourth rigid member 40, comprise a moulded section 34, 36b, 38, 40b. The moulded sections are made by a moulding process. The second and fourth rigid members 36, 40 each comprises a moulded section 36b, 40b and a cylindrical section 36a, 40a. Furthermore, the second and fourth rigid members 36 and 40 are longer than adjacent rigid members 34, 38, 42 i.e., the second rigid member 36 is longer than the first and third rigid members 34, 38 and the fourth rigid 40 member is longer than the third and fifth rigid members 38, 42.

The robotic arm 3 is fastened at the base end 30 to a structure 1, which may be a factory floor or another structure from which the robotic arm 3 is meant to work. In some examples, the structure 1 may be part of a movable unit, such as a mobile robot or a vehicle, which would allow the robot 2 or at least the robotic arm 3 to be moved between different positions. The robotic arm 3 may be fastened to the structure 1 by fastening bolts 22.

The control unit 200, as illustrated in fig. 1, may form an integral part of the base 4 of the robotic arm 3 or may be adapted to be arranged between the base 4 and the structure 1. Alternatively, the control unit 200 may be provided as an additional unit. Thus, in some examples, the control unit 200 may be provided as an external control unit 200 to control the robotic arm 3.

Although being described in relation to a robotic arm 3 being operable relative to seven axes Ax1, Ax2, Ax3, Ax4, Ax5, Ax6, Ax7, the present disclosure may alternatively be applied to a robot 2 having only six axes, or even fewer axes. For example, with respect to the example illustrated in Fig. 1, movement around the third axis Ax3, may be omitted, to obtain a robot operable relative to six axes.

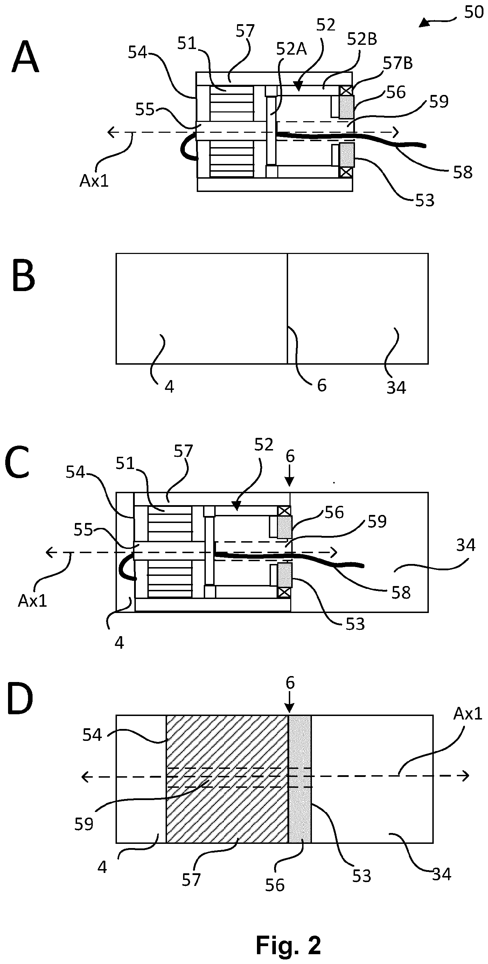

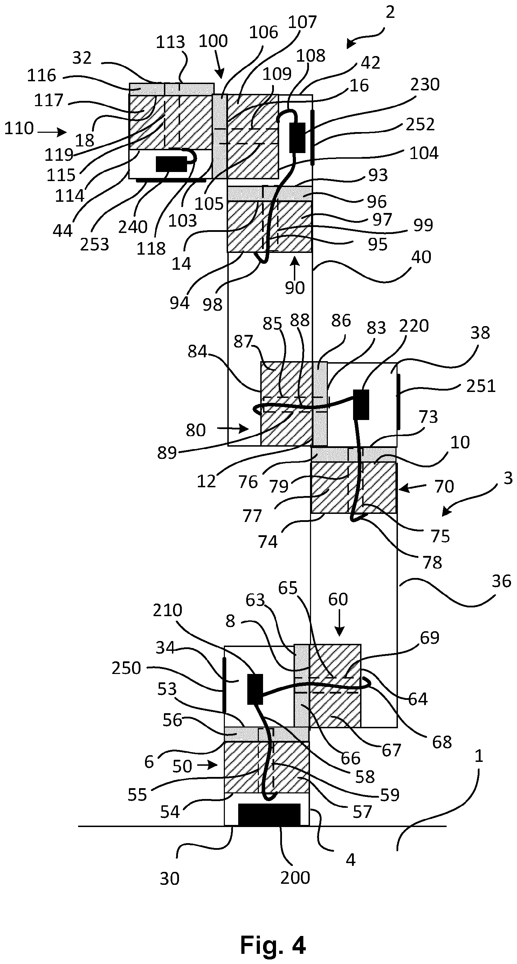

The robotic arm 3 further comprises a plurality of motor assemblies 50, 60, 70, 80, 90, 100, 110 enclosed within the rigid members (see, e.g., Fig. 4). A preferred motor assembly according to the present invention is described in relation to Fig. 2. The plurality of motor assemblies 50, 60, 70, 80, 90, 100, 110 includes a first motor assembly 50, a second motor assembly 60, a third motor assembly 70, a fourth motor assembly 80, a fifth motor assembly 90, a sixth motor assembly 100 and a seventh motor assembly 110. A preferred arrangement of the motor assemblies 50, 60, 70, 80, 90, 100, 110 within a seven-axis robot 2 according to the present invention is illustrated and discussed in relation to Fig. 4.

The plurality of motor assemblies 50, 60, 70, 80, 90, 100, 110 is configured to cause movement of the robotic arm 3 with respect to the plurality of axes Ax1, Ax2, Ax3, Ax4, Ax5, Ax6, Ax7. For example, a first motor assembly 50 may cause movement of the first joint 6 with respect to the first axis Ax1. A second motor assembly 60 may cause movement of the second joint 8 with respect to the second axis Ax2. A third motor assembly 70 may cause movement of the third joint 10 with respect to the third axis Ax3, etc.

The robotic arm 3 further comprises a plurality of circuitries 210, 220, 230, 240. A preferred arrangement of the plurality of circuitries 210, 220, 230, 240 within a seven-axis robot 2 according to the present invention is illustrated and discussed in relation to Fig. 4.

The robotic arm 3 further comprises a plurality of access openings 250, 251, 252, 253. A preferred arrangement of the plurality of access openings 250, 251, 252, 253 in a seven-axis robot 2 according to the present invention is illustrated and discussed in relation to Figs. 3 and 4.

Fig. 2A is a schematic diagram illustrating a preferred motor assembly 50. The motor assembly 50 of Fig. 2A is described as the first motor assembly 50. However, the motor assembly 50 as described and illustrated in Fig. 2A may also or alternatively apply to any or all of the second motor assembly 60, the third motor assembly 70, the fourth motor assembly 80, the fifth motor assembly 90, the sixth motor assembly 100 and the seventh motor assembly 110, as referred to above.

The first motor assembly 50 extends along a first axis Ax1 between a first output end 53 and a first housing end 54. The first motor assembly 50 is configured to cause movement of a first joint 6 (cf. Fig. 2C) with respect to the first axis Ax1 by relative movement between the first output end 53 and the first housing end 54.

The first motor assembly 50 comprises a first motor 51 connected to a first gear 52. The first gear 52 may be a strain wave gear, e.g. comprising a wave generator 52A and a flexspline 52B. The first motor 51 is arranged at the first housing end 54 and the first gear 52 is arranged between the first motor 51 and the first output end 53. In other words, the first motor 51 is arranged more proximal to the first housing end 54 than the first gear 52, and the first gear 52 is arranged more proximal to the first output end 53 than the first motor 51.

The first gear 52 is connected to a first output part 56. In this way, the first output part 56 is rotated, via the first gear 52, when the first motor 51 is rotated. The first output part 56 includes means for connecting the first output part 56 to a rigid member 4, 34, 36, 38, 40, 42, 44 of a robotic arm 3, such as one of the base 4 and the first rigid member 34 of Fig. 2B. Furthermore, in the present example, the first output part 56 forms the first output end 53 of the first motor assembly 50.

The first motor assembly 50 further comprises a first housing part 57 surrounding the first motor 51 and the first gear 52. Rotation of the first motor 51 causes rotation of the first output part 56 relative to the first housing part 57.

The first motor assembly 50 comprises a first main bearing 57B. The first main bearing 57B may form part of the first output part 57 and/or the first housing part 57. The first main bearing 57B is provided between the first output part 57 and the first housing part 57.

The first motor assembly 50 also comprises a first passage 59 extending through the first motor assembly 50 from the first housing end 54 to the first output end 53 along the first axis Ax1. The first motor 51 comprises a first hollow axle 55 extending through the first motor 51 along the first axis Ax1. The hollow space within the first hollow axle 55 forms part of the first passage 59. In some examples, the first hollow axle 55 may extend through-out the length of the first motor assembly 50, e.g. from the first housing end 54 to the first output end 53.

A first wire 58 (may in practice be a plurality of wires, such as three wires) is connected to the first motor 51 at one end. The first wire 58 is configured to be connected to a circuitry (not illustrated) at the other end, such that the first motor 51 can be controlled through a processing unit of the connected circuitry. The first passage 59, extending all the way from the first output end 53 to the first housing end 54, makes it possible to guide the first wire 58 through the first passage 59 of the first motor assembly 50 such that it can be connected to a processing unit arranged close to the output end 53 of the first motor assembly 50.

The first motor assembly 50 is configured to cause movement of a first joint 6 with respect to a first axis Ax1 by relative movement between the first output end 53/the first output part 56 and the first housing end 54/the first housing part 57. The first output part 56 is configured to be coupled to one rigid member, whereas the housing part 57 is configured to be coupled to another rigid member, thereby providing for movement at the first joint 6 between the two rigid members, which can be controlled by the motor 51 of the first motor assembly 50.

Fig. 2B is a simple schematic diagram illustrating two rigid members 4, 34 arranged adjacent to each other, and a first joint 6 formed between the two rigid members. In the illustrated example of fig. 2B, the two rigid members 4, 34 are the base 4 and the first rigid member 34. However, the two rigid members could also be two other adjacent rigid members, such as the first and the second rigid member 34, 36, the second and the third rigid member 36, 38, the third and the fourth rigid member 38, 40, the fourth and the fifth rigid member 40, 42 or the fifth and the sixth rigid member 42, 44.

Fig. 2C is a schematic diagram illustrating the first motor assembly 50 of Fig. 2A arranged within and fixed to the base 4 and to the first rigid member 34. More specifically, the first housing part 57 is fixed to the base 4, while the first output part 56 is fixed to the first rigid member 34. In that way, the first motor assembly 50 is configured to cause movement of the first rigid member 34 relative to the base 4 at the first joint 6, with respect to the first axis Ax1, by relative movement between the first output end 53 and the first housing end 54, and/or between the first output part 56 and the first housing part 57.

Preferably, all of the plurality of motor assemblies 50, 60, 70, 80, 90, 100, 110 according to the present invention comprise the same components as described above for the first motor assembly 50 in relation to Fig. 2A. For example (cf. Fig. 4), a second motor assembly 60 extends along a second axis Ax2 between a second output end 63 and a second housing end 64 and is configured to cause movement of a second joint 8 with respect to the second axis Ax2 by relative movement between the second output end 63 and the second housing end 64. The second motor assembly 60 comprises a second motor 61 connected to a second gear 62, etc. In the same way, a third motor assembly 70 extends along a third axis Ax3 between a third output end 73 and a third housing end 74 and is configured to cause movement of a third joint 10 with respect to the third axis Ax3 by relative movement between the third output end 73 and the third housing end 74. The third motor assembly 70 comprises a third motor 71 connected to a third gear 72, etc.

Fig. 2D is a simplified schematic diagram of a first motor assembly 50 similar to that of fig. 2C, illustrating that the first motor assembly 50 extends between a first housing end 54 and a first output end 53. The simplified illustration of the first motor assembly 50 in Fig. 2D further shows that the first motor assembly comprises a housing part 57 fixed to one rigid member 4 and being configured to move relative to an output part 56 fixed to another rigid member 34. The simplified schematic diagram of the first motor assembly 50 will be used to illustrate the arrangement of the plurality of motor assemblies 50, 60, 70, 80, 90, 100, 110 within a robotic arm 3 of Figs. 4-5.

Fig. 3 is a simplified schematic illustration of the seven-axis robot 2 of Fig. 1.

Fig. 4 is a simple schematic diagram illustrating a preferred arrangement of the motor assemblies 50, 60, 70, 80, 90, 100, and circuitries 210, 220, 230, 240 within the seven-axis robot of fig. 3.

As can be seen in Fig. 4, the plurality of motor assemblies 50, 60, 70, 80, 90, 100, 110 includes a first motor assembly 50, a second motor assembly 60, a third motor assembly 70, a fourth motor assembly 80, a fifth motor assembly 90, a sixth motor assembly 100 and a seventh motor assembly 110.

As can be seen in Fig. 4, the plurality of circuitries 210, 220, 230, 240 includes a first circuitry 210, a second circuitry 220, a third circuitry 230 and a fourth circuitry 230.

The first motor assembly 50 extends along the first axis Ax1 between the first output end 53 and the first housing end 54.

The first motor assembly 50 is configured to cause movement of the first joint 6 with respect to the first axis Ax1 by relative movement between the first output end 53 and the first housing end 54.

The first housing part 57 of the first motor assembly 50 is fixed to the base 4 of the robotic arm 3 and the first output part 56 of the first motor assembly 50 is fixed to the first rigid member 34 of the robotic arm 3, such that relative movement between the first housing end 54 and the first output end 53 and/or between the first housing part 57 and the first output part 56 causes relative motion between the base 4 and the first rigid member 34.

The first motor assembly 50 further comprises a first passage 59 extending through the first motor assembly 50 along the first axis Ax1. The first passage 59 is illustrated by dashed lines.

The second motor assembly 60 extends along a second axis Ax2 between a second output end 53 and a second housing end 54.

The second motor assembly 60 is configured to cause movement of the second joint 8 with respect to a second axis Ax2 by relative movement between the second output end 63 and the second housing end 64.

The second housing part 63 of the second motor assembly 60 is fixed to the second rigid member 36 of the robotic arm and the second output part 66 of the second motor assembly 60 is fixed to the first rigid member 34 of the robotic arm 3 such that relative movement between the second housing end 64/the second housing part 67 and the second output end 63/the second output part 66 cause relative motion between the first rigid member and the second rigid member.

The second motor assembly 60 further comprises a second passage 69 extending through the second motor assembly 60 along the second axis Ax2. The second passage 69 is illustrated by dashed lines.

A first circuitry 210 is configured for controlling the first and second motors 51, 61 of the first and second motor assemblies 50, 60. The first circuitry 210 is arranged between the first joint 6 and the second joint 8 within the first rigid member 34 of the robotic arm 3 and connected to the first motor 51 of the first motor assembly 50 by first wires 58 and to the second motor 61 of the second motor assembly 60 by second wires 68.

The first circuitry 210 may be a single circuitry unit, such as a PCB, comprising two processing units including a first processing unit and a second processing unit (not illustrated). The first processing unit may be configured for controlling the first motor assembly 50 and the second processing unit may be configured for controlling the second motor assembly 60.

As illustrated in Fig. 4, the first motor assembly 50 is arranged with the first output end 53 towards the first circuitry 210 and the second motor assembly 60 is arranged with the second output end 63 towards the first circuitry 210. The first wires 58 run through the passage 59 of the first motor assembly 50 and the second wires 68 run through the passage 69 of the second motor assembly 60. In one embodiment, this is possible, because the first and second motors 51, 61 are configured with a first and second hollow axle 55, 65, respectively.

Thus, the first motor assembly 50 is arranged such that the first circuitry 210 is closer to the first motor 51 than to the first gear 52 and such that the first gear 52 is arranged between the first circuitry 210 and the first motor 51. In the same way, the second motor assembly 60 is arranged such that the first circuitry 210 is closer to the second motor 61 than to the second gear 62 and the second gear 62 is arranged between the first circuitry 210 and the second motor 61.

Orienting the first motor assembly with the first output end 53 towards the first circuitry 210 and in effect with the first output end 53 being provided at the far end of the first motor assembly 50 relative to the base 4, the load on the output end 53 and/or the main bearing of the motor assembly is minimized due to the length of the robot arm from the main bearing being reduced. Orienting the second motor assembly with the first output end 63 towards the first circuitry 210 and in effect with the first housing end 64 being provided at the end extending towards the second rigid member 36, heat from the second motor assembly 60 may be more efficiently be transferred to the surroundings due to the bigger size of the second rigid member 36 (compared to the first rigid member 34). Also, the orientation of the first motor assembly allows for efficient heat transfer from the first motor assembly 50 to the base 4 and to the structure to which the robotic arm is fastened.

The third motor assembly 70 extends along a third axis Ax3 between a third output end 73 and a third housing end 74.

The third motor assembly 70 is configured to cause movement of the third joint 10 with respect to the third axis Ax3 by relative movement between the third output end 73 and the third housing part end 74.

The third housing part 77 of the third motor assembly 70 is fixed to the second rigid member 36 of the robotic arm 3, and the third output part 76 of the third motor assembly 70 is fixed to the third rigid member 38 of the robotic arm 3 such that relative movement between the third housing end 74 and the third output end 73 and/or between the third housing part 77 and the third output part 76 cause relative motion between the second rigid member 36 and the third rigid member 38.

The third motor assembly 70 further comprises a third passage 79 extending through the third motor assembly 70 along the third axis Ax3. The third passage 79 is illustrated by dashed lines.

The fourth motor assembly 80 extends along a fourth axis Ax4 between a fourth output end 83 and a fourth housing end 84.

The fourth motor assembly 80 is configured to cause movement of the fourth joint 12 with respect to the fourth axis Ax4 by relative movement between the fourth output end 83 and the fourth housing part end 84.

The fourth housing part 87 of the fourth motor assembly 80 is fixed to the fourth rigid member 40 of the robotic arm 3 and the fourth output part 86 of the fourth motor assembly 80 is fixed to the third rigid member 38 of the robotic arm 3 such that relative movement between the fourth housing end 84 and the fourth output end 83 and/or between the fourth housing part 87 and the fourth output part 86 cause relative motion between the third rigid member 38 and the fourth rigid member 40.

The fourth motor assembly 80 further comprises a fourth passage 89 extending through the fourth motor assembly 80 along the fourth axis Ax4. The fourth passage 89 is illustrated by dashed lines.

A second circuitry 220 is configured for controlling the third and fourth motors 71, 81 of the third and fourth motor assemblies 70, 80. The second circuitry 220 is arranged between the third joint 10 and the fourth joint 12 within the third rigid member 38 of the robotic arm 3 and connected to the third motor 71 of the third motor assembly 70 by third wires 78 and to the fourth motor 81 of the fourth motor assembly 80 by fourth wires 88.

The second circuitry 220 may be a single circuitry unit, such as a PCB, comprising two processing units including a third processing unit and a fourth processing unit (not illustrated). The third processing unit may be configured for controlling the third motor assembly 70 and the fourth processing unit may be configured for controlling the fourth motor assembly 80.

As illustrated in Fig. 4, the third motor assembly 70 is arranged with the third output end 73 towards the second circuitry 220 and the fourth motor assembly 80 is arranged with the fourth output end 83 towards the second circuitry 220. The third wires 78 run through the passage 79 of the third motor assembly 70 and the fourth wires 88 run through the passage 89 of the fourth motor assembly 80. In one embodiment, this is possible, because the third and fourth motors 71, 81 are configured with a third and fourth hollow axle 75, 85, respectively.

Thus, the third motor assembly 70 is arranged such that the second circuitry 220 is closer to the third motor 71 than to the third gear 72 and such that the third gear 72 is arranged between the second circuitry 220 and the third motor 71. In the same way, the fourth motor assembly 80 is arranged such that the second circuitry 220 is closer to the fourth motor 81 than to the fourth gear 82 and the fourth gear 82 is arranged between the second circuitry 220 and the fourth motor 81.

The advantages as explained above with respect to the first and second motor assemblies 50, 60, relating to reduction of load on the main bearing and improved transfer of heat apply mutatis mutandis also to the illustrated orientation of the third and fourth motor assemblies 70, 80.

The fifth motor assembly 90 extends along a fifth axis Ax5 between a fifth output end 93 and a fifth housing end 94.

The fifth motor assembly 90 is configured to cause movement of the fifth joint 14 with respect to a fifth axis Ax5 by relative movement between the fifth output end 93 and the fifth housing end 94.

The fifth housing part 97 of the fifth motor assembly 90 is fixed to the fourth rigid member 40 of the robotic arm 3 and the fifth output part 96 of the fifth motor assembly 90 is fixed to the fifth rigid member 42 of the robotic arm 3, such that relative movement between the fifth housing end 94 and the fifth output end 93 and/or between the fifth housing part 97 and the fifth output part 96 cause relative motion between the fourth rigid member 40 and the fifth rigid member 42.

The fifth motor assembly 90 further comprises a fifth passage 99 extending through the fifth motor assembly 90 along the fifth axis Ax5. The fifth passage 99 is illustrated by dashed lines.

The sixth motor assembly 100 extends along a sixth axis Ax6 between a sixth output end 103 and a sixth housing end 104.

The sixth motor assembly 100 is configured to cause movement of the sixth joint 16 with respect to a sixth axis Ax6 by relative movement between the sixth output end 103 and the sixth housing end 104.

The sixth housing part 107 of the sixth motor assembly 100 is fixed to the fifth rigid member 42 of the robotic arm 3, and the sixth output part 106 of the sixth motor assembly 100 is fixed to the sixth rigid member 44 of the robotic arm 3 such that relative movement between the sixth housing end 104 and the sixth output end 103 and/or between the sixth housing part 107 and the sixth output part 106 cause relative motion between the fifth rigid member 42 and the sixth rigid member 44.

The sixth motor assembly 100 further comprises a sixth passage 109 extending through the sixth motor assembly 100 along the sixth axis Ax6. The sixth passage 109 is illustrated by dashed lines.

A third circuitry 230 is configured for controlling the fifth and sixth motors 91, 101 of the fifth and sixth motor assemblies 90, 100. The third circuitry 230 is arranged between the fifth joint 14 and the sixth joint 16 within the fifth rigid member 42 of the robotic arm 3 and connected to the fifth motor 91 of the fifth motor assembly 90 by fifth wires 98 and to the sixth motor 101 of the sixth motor assembly 100 by sixth wires 108.

The third circuitry 230 may be a single circuitry unit, such as a PCB, comprising two processing units including a fifth processing unit and a sixth processing unit (not illustrated). The fifth processing unit may be configured for controlling the fifth motor assembly 90 and the sixth processing unit may be configured for controlling the sixth motor assembly 100.

As illustrated in Fig. 4, the fifth motor assembly 90 is arranged with the fifth output end 93 towards the third circuitry 230 and the sixth motor assembly 100 is arranged with the sixth housing end 104 towards the third circuitry 230. The fifth wires 98 run through the fifth passage 99 of the fifth motor assembly 90, and the sixth wires 108 do not run through the sixth passage 109 of the sixth motor assembly 100. In one embodiment, this is possible, because the fifth motor 91 is configured with a fifth hollow axle 95.

Thus, the fifth motor assembly 90 is arranged such that the third circuitry 230 is closer to the fifth motor 91 than to the fifth gear 92 and such that the fifth gear 92 is arranged between the third circuitry 230 and the fifth motor 91. However, the sixth motor assembly 100 is arranged such that the third circuitry 230 is closer to the sixth gear 102 than to the sixth motor 101 and the sixth motor 101 is arranged between the third circuitry 230 and the sixth gear 102.

The advantages as explained above with respect to the first to fourth motor assemblies 50, 60, 70, 80 relating to reduction of load on the main bearing and improved transfer of heat apply mutatis mutandis also to the illustrated orientation of the fifth and sixth motor assemblies 90, 100.

The seventh motor assembly 110 extends along a seventh axis Ax7 between a seventh output end 113 and a seventh housing end 114.

The seventh motor assembly 110 is configured to cause movement of the seventh joint 18 with respect to a seventh axis Ax7 by relative movement between the seventh output end 113 and the seventh housing end 114.

The seventh housing part 117 of the seventh motor assembly 110 is fixed to the sixth rigid member 44 of the robotic arm 3 and the seventh output part 116 of the seventh motor assembly 110 may be fixed and/or configured to be fixed to a tool flange at the tool end 32 of the robotic arm 3, such that relative movement between the seventh housing end 114 and the seventh output end 113 and/or between the seventh housing part 117 and the seventh output part 116 cause relative motion between the sixth rigid member 44 and the tool end 32.

The seventh motor assembly 110 further comprises a seventh passage 119 extending through the seventh motor assembly 110 along the seventh axis Ax7. The seventh passage 119 is illustrated by dashed lines.

A fourth circuitry 240 is configured for controlling the seventh motor 111 of the seventh motor assembly 110. The fourth circuitry 240 is arranged between the sixth joint 16 and the seventh joint 18 within the sixth rigid member 44 of the robotic arm 3 and connected to the seventh motor 111 of the seventh motor assembly 110 by seventh wires 118.

The fourth circuitry 240 may be a single circuitry unit, such as a PCB, e.g. comprising at least one processing unit including a seventh processing unit (not illustrated). The seventh processing unit may be configured for controlling the seventh motor assembly 110.

As illustrated in Fig. 4, the seventh motor assembly 110 is arranged with the seventh housing end 114 towards the fourth circuitry 240. The seventh wires 118 do not run through the passage 119 of the seventh motor assembly 110.

Thus, the seventh motor assembly 110 is arranged such that the fourth circuitry 240 is closer to the seventh motor 111 than to the seventh gear 112 and such that the seventh motor 111 is arranged between the fourth circuitry 240 and the seventh gear 112.

Because the one or more circuitries of the robot according to the invention comprise(s) several processing units, one circuitry may be capable of controlling several motors. Thereby, the circuitry necessary to realise the robot may be reduced.

As can be seen in Fig. 3 and Fig. 4, four access openings 250, 251, 252, 253 are arranged in the robotic arm 3 including a first access-opening 250, a second access opening 251, a third access-opening 252 and a fourth access-opening 253. The access openings 250, 251, 252, 253 are provided to allow access to the circuitries 210, 220, 230, 240 and/or motor assemblies 50, 60, 70, 80, 90, 100, 110 arranged within the rigid members 4, 34, 36, 38, 40, 42. The first access opening 250 is arranged in the first rigid member 34 and configured for allowing access to the first circuitry 210 and/or the first and second motor assemblies 50, 60. The second access opening 251 is arranged in the third rigid member 38 and configured for allowing access to the second circuitry 220 and/or the third and fourth motor assemblies 70, 80. The third access opening 252 is arranged in the fifth rigid member 42 and configured for allowing access to the third circuitry 230 and/or the fifth and sixth motor assemblies 90, 100. The fourth access opening 253 is arranged in the sixth rigid member 44 and configured for allowing access to the fourth circuitry 240 and/or the seventh motor assembly 110.

Because the number of circuitries necessary to realise the robotic arm is reduced in accordance with the present invention, the number of access openings required to allow access to the circuitries and/or motor assemblies for installation and inspection by operators may also be reduced compared to the prior art.

As illustrated in Fig. 4, the second and fourth rigid members 36 and 40 are longer than adjacent rigid members 34, 38, 42 i.e. the second rigid member 36 is longer than the first and third rigid members 34, 38 and the fourth rigid 40 member is longer than the third and fifth rigid members 38, 42.

The motors of the motor assemblies 50, 60, 70, 80, 90, 100, 110 produce and release heat to the surroundings when in use. Since the motors are arranged at the housing end 54, 64, 74, 84, 94, 104, 114 of the motor assemblies, heat is primarily produced and released at the housing end 54, 64, 74, 84, 94, 104, 114 /housing part 57, 67, 77, 87, 97, 107, 117 of the motor assemblies 50, 60, 70 80, 90, 100, 110. Thus, it is preferred that the motor assemblies 50, 60, 70 80, 90, 100, 110 are arranged within the rigid members 4, 34, 36, 38, 40, 42, 44 such that the housing end 54, 64, 74, 84, 94, 104, 114 face towards a rigid element having a larger size. For example, the second and third motor assemblies 60, 70 may be oriented such that their housing ends 64, 74 face towards the second rigid member 36, and the fourth and fifth motor assemblies 80, 90 may be oriented such that their housing ends 84, 94 face towards the fourth rigid member 40. In this way, heat is primarily led into the longer rigid members. Thus, the risk of overheating may be reduced.

By "face towards" is not meant that the housing end should be pointed directly toward the rigid member, but merely that the motor assembly is arranged such that heat will primarily be led into the rigid member instead of into adjacent rigid members, such as those comprising the circuitries 210, 220, 230, 240.

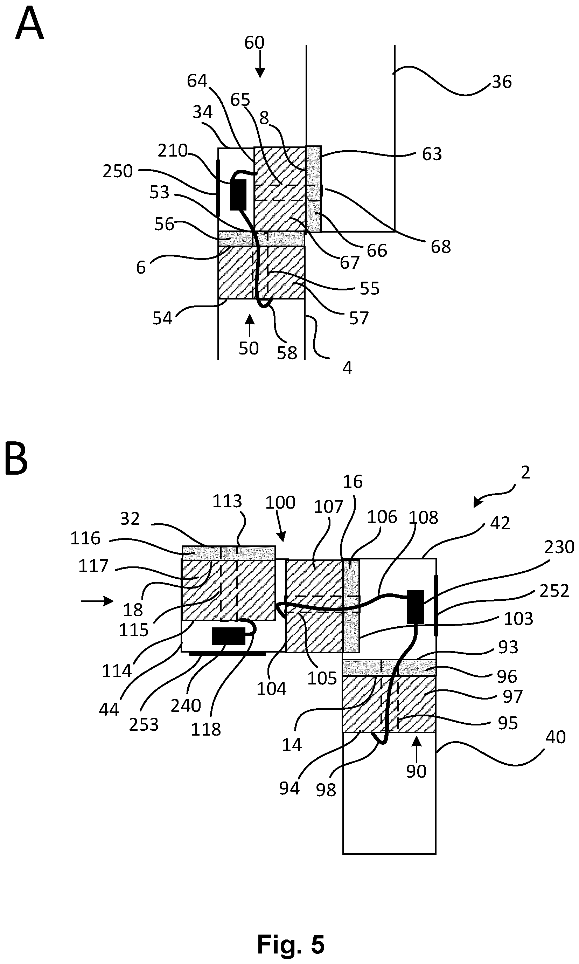

Fig. 5A is a simple schematic diagram illustrating an alternative arrangement of the first and second motor assemblies 50, 60 relative to the first circuitry 210. Even though Fig. 5A describes an alternative arrangement of the first and second motor assemblies 50, 60 relative to the first circuitry 210, the same alternative arrangement could be used for the third and fourth motor assemblies 70, 80 relative to the second circuitry 240.

In Fig. 5A, the first motor assembly 50 is arranged with the first output end 53 towards the first circuitry 210 and the first wires 58 run through the first motor assembly 50. However, the second motor assembly 60 is arranged with the second housing end 64 towards the first circuitry 210. In this way, it is not necessary for the second wires 68 to run through the second motor assembly 60 in order to be connected to the first circuitry 210.

Thus, the first motor assembly 50 is arranged such that the first circuitry 210 is closer to the first motor 51 than to the first gear 52 and such that the first gear 52 is arranged between the first circuitry 210 and the first motor 51. However, the second motor assembly 60 is arranged such that the first circuitry 210 is closer to the second gear 62 than to the second motor 61 and the second motor 61 is arranged between the first circuitry 210 and the second gear 62.

As can be seen in Fig. 5A, when compared to Fig. 4, heat released from the second housing end 64 of the second motor assembly 60 will primarily be released in the first rigid member 34 comprising the first circuitry 210, instead of being released in the larger second rigid member 36 as illustrated in Fig. 4. Thus, the arrangement of the first and second motor assemblies 50, 60 relative to the first circuitry 210, as illustrated in Fig. 4, allows for a reduced risk of overheating, particularly overheating of the first circuitry 210, since heat is led away from the first circuitry 210 and into a larger space where the heat can be spread more. However, in some examples, heat generation from the second motor assembly 60 may be sufficiently low to allow the orientation as exemplified in Fig. 5A.

Fig. 5B is a simple schematic diagram illustrating an alternative arrangement of the fifth, sixth and seventh motor assemblies 90, 100, 110 relative to the third circuitry 230 and fourth circuitry 240. Fig. 5B is a simple schematic diagram illustrating an alternative arrangement of the three motor assemblies 90, 100, 110 arranged most proximal to the tool end 32 of a robotic arm 3, which in this case is the fifth 90, the sixth 100 and the seventh 110 motor assembly. However, in case the robotic arm 3 comprises less than seven motor assemblies, such as only six motor assemblies, the three motor assemblies arranged most proximal to the tool end 32 of a robotic arm would be the fourth 80, fifth 90 and sixth motor 100 assembly.

In Fig. 5B, the fifth motor assembly 90 is arranged with the fifth output end 96 towards the third circuitry 230 and the sixth motor assembly 100 is arranged with the sixth output end 106 towards the third circuitry 230. The fifth wires 98 run through the fifth motor assembly 90 and the sixth wires 108 run through the sixth motor assembly 100. This is possible, because the fifth and sixth motor assemblies 90, 100 are configured with a fifth and sixth hollow axle 95, 105, respectively, running through the motors 91, 101 of the fifth and sixth motor assemblies 90, 100. The seventh motor assembly 110 is arranged with the seventh housing end 114 towards the fourth circuitry 240. In this way, it is not necessary for the seventh wires 118 to run through the seventh motor assembly 110 in order to be connected to the fourth circuitry 240.

Thus, the fifth motor assembly 90 is arranged such that the third circuitry 230 is closer to the fifth gear 92 than to the fifth motor 91 and the fifth motor 91 is arranged between the third circuitry 230 and the fifth gear 92. In the same way, the sixth motor assembly 100 is arranged such that the third circuitry 230 is closer to the sixth gear 102 than to the sixth motor 101 and such that the sixth gear 102 is arranged between the third circuitry 230 and the sixth motor 101. However, the seventh motor assembly 110 is arranged such that the fourth circuitry 240 is closer to the seventh motor 111 than to the seventh gear 112 and the seventh motor 111 is arranged between the fourth circuitry 240 and the seventh gear 112.

As can be seen in Fig. 5B, when compared to Fig. 4, the sixth rigid member 44 needs to be longer in order to be able to accommodate the fifth and sixth motor assemblies 90, 100 arranged relative to the third circuitry 230 as described in Fig. 5B compared to when arranged as described in Fig. 4. Thus, the arrangement of the fifth and sixth motor assemblies 90, 100 relative to the third circuitry 230, as illustrated in Fig. 4, allows for a more compact design of the robotic arm 3 than other embodiments.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### ITEMIZED LIST OF EMBODIMENTS

1. A robot comprising a robotic arm extending between a base end and a tool end, the robotic arm comprising:
   a plurality of joints, including a first joint and a second joint,
      wherein the first joint is positioned between the base end and the second joint and wherein the second joint is positioned between the first joint and the tool end,
   a plurality of motor assemblies, including a first motor assembly and a second motor assembly,
      wherein the first motor assembly extends along a first axis between a first output end and a first housing end and configured to cause movement of the first joint with respect to the first axis by relative movement between the first output end and the first housing end, and wherein the first motor assembly comprises a first motor connected to a first gear, and a first passage extending from the first housing end to the first output end along the first axis, and
      wherein the second motor assembly extends along a second axis between a second output end and a second housing end and configured to cause movement of the second joint with respect to the second axis by relative movement between the second output end and the second housing end, and wherein the second motor assembly comprises a second motor connected to a second gear, and
   a number of circuitries, including a first circuitry for controlling the first and second motors,
      wherein the first circuitry is arranged between the first joint and the second joint within the robotic arm, and
      wherein the first circuitry is connected to the first motor by first wires and to the second motor by second wires, and
      wherein the first motor assembly is arranged with the first output end towards the first circuitry, and wherein the first wires extend through the first passage of the first motor assembly.
2. A robot according to item 1, wherein the second motor assembly comprises a second passage extending from the second housing end to the second output end along the second axis and wherein the second motor assembly is arranged with the second output end towards the first circuitry, and wherein the second wires extend through the second passage of the second motor assembly.
3. A robot according to any of the preceding items,
   wherein the plurality of joints further includes a third joint and a fourth joint,
   wherein the third joint is positioned between the second joint and the fourth joint and
   wherein the fourth joint is positioned between the third joint and the tool end, wherein the plurality of motor assemblies further includes a third motor assembly and a fourth motor assembly,
   wherein the third motor assembly extends along a third axis between a third output end and a third housing end and configured to cause movement of the third joint with respect to the third axis by relative movement between the third output end and the third housing end, and wherein the third motor assembly comprises a third motor connected to a third gear, and a third passage extending from the third housing end to the third output end along the third axis, and
   wherein the fourth motor assembly extends along a fourth axis between a fourth output end and a fourth housing end and configured to cause movement of the fourth joint with respect to the fourth axis by relative movement between the fourth output end and the fourth housing end, and wherein the fourth motor assembly comprises a fourth motor connected to a fourth gear, and
   wherein the number of circuitries further includes a second circuitry for controlling the third and fourth motors,
      wherein the second circuitry is arranged between the third joint and the fourth joint within the robotic arm, and
      wherein the second circuitry is connected to the third motor by third wires and to the fourth motor by fourth wires, and
      wherein the third motor assembly is arranged with the third output end towards the second circuitry, and wherein the third wires extend through the third passage of the third motor assembly.
4. A robot according to any of the preceding items, wherein the fourth motor assembly comprises a fourth passage extending from the fourth housing end to the fourth output end along the fourth axis, and wherein the fourth motor assembly is arranged with the fourth output end towards the first circuitry, and wherein the fourth wires extend through the fourth passage of the fourth motor assembly.
5. A robot according to any of the preceding items,
   wherein the plurality of joints further includes a fifth joint and a sixth joint,
   wherein the fifth joint is positioned between the fourth joint and the sixth joint and
   wherein the sixth joint is positioned between the fifth joint and the tool end, wherein the plurality of motor assemblies further includes a fifth motor assembly and a sixth motor assembly,
   wherein the fifth motor assembly extends along a fifth axis between a fifth output end and a fifth housing end and configured to cause movement of the fifth joint with respect to the fifth axis by relative movement between the fifth output end and the fifth housing end, and wherein the fifth motor assembly comprises a fifth motor connected to a fifth gear, and a fifth passage extending from the fifth housing end to the fifth output end along the fifth axis, and
   wherein the sixth motor assembly extends along a sixth axis between a sixth output end and a sixth housing end and configured to cause movement of the sixth joint with respect to the sixth axis by relative movement between the sixth output end and the sixth housing end, and wherein the sixth motor assembly comprises a sixth motor connected to a sixth gear, and
   wherein the plurality of circuitries further includes a third circuitry for controlling the fifth and sixth motors,
   wherein the third circuitry is arranged between the fifth joint and the sixth joint within the robotic arm, and
   wherein the third circuitry is connected to the fifth motor by fifth wires and to the sixth motor by sixth wires, and
   wherein the fifth motor assembly is arranged with the fifth output end towards the third circuitry, and wherein the fifth wires extend through the fifth passage of the fifth motor assembly.
6. A robot according to any of the preceding items, wherein the sixth motor assembly comprises a sixth passage extending from the sixth housing end to the sixth output end along the sixth axis and wherein the sixth motor assembly is arranged with the sixth output end towards the first circuitry, and wherein the sixth wires extend through the sixth passage of the sixth motor assembly.
7. A robot according to any of the preceding items, wherein the plurality of joints further includes a seventh joint, wherein the seventh joint is positioned between the sixth joint and the tool end, and
   wherein the plurality of motor assemblies further includes a seventh motor assembly, wherein the seventh motor assembly extends along a seventh axis between a seventh output end and a seventh housing end and configured to cause movement of the seventh joint with respect to the seventh axis by relative movement between the seventh output end and the seventh housing end, and wherein the seventh motor assembly comprises a seventh motor connected to a seventh gear.
8. A robot according to any of the preceding items, wherein the third circuitry is connected to the seventh motor by seventh wires, and the seventh wires extend through the sixth passage of the sixth motor assembly.
9. A robot according to any of the preceding items, wherein the seventh motor assembly is arranged with the seventh output end towards the tool end.
10. A robot according to any of the preceding items, wherein the plurality of circuitries further includes a fourth circuitry for controlling the seventh motor.
11. A robot according to any of the preceding items, wherein the fourth circuitry is arranged between the sixth and the seventh joint within the robotic arm.
12. A robot according to any of the preceding items, wherein the fourth circuitry is arranged between the seventh joint and the tool end within the robotic arm.
13. A robot according to any of the preceding items, wherein the seventh motor assembly is arranged with the seventh output end towards the fourth circuitry, and wherein the seventh motor assembly comprises a seventh passage extending from the seventh housing end to the seventh output end along the seventh axis, and wherein the seventh wires extend through the seventh passage of the seventh motor assembly.
14. A robot according to any of the preceding items, wherein the seventh motor assembly is arranged with the seventh housing end towards the fourth circuitry.
15. A robot according to any of the preceding items, wherein one or more of the plurality of circuitries comprises at least two processing units.
16. A robot according to any of the preceding items, wherein the plurality of circuitries is single circuitry units, such as PCBs.
17. A robot according to any of the preceding items, wherein the first circuitry comprises a first processing unit and a second processing unit.
18. A robot according to any of the preceding items, wherein the second circuitry comprises a third processing unit and a fourth processing unit.
19. A robot according to any of the preceding items, wherein the third circuitry comprises a fifth processing unit and a sixth processing unit.
20. A robot according to any of the preceding items, wherein the third circuitry further comprises a seventh processing unit.
21. A robot according to any of the preceding items, wherein the fourth circuitry comprises a seventh processing unit.
22. A robot according to any of the preceding items, wherein the fourth circuitry comprises an eighth processing unit.
23. A robot according to any of the preceding items, wherein the first processing unit is configured for controlling the first motor assembly and the second processing unit is configured for controlling the second motor assembly.
24. A robot according to any of the preceding items, wherein the third processing unit is configured for controlling the third motor assembly and the fourth processing unit is configured for controlling the fourth motor assembly.
25. A robot according to any of the preceding items, wherein the fifth processing unit is configured for controlling the fifth motor assembly and the sixth processing unit is configured for controlling the sixth motor assembly.
26. A robot according to any of the preceding items, wherein the seventh processing unit is configured for controlling the seventh motor assembly.
27. A robot according to any of the preceding items, wherein the eighth processing unit is configured for controlling a tool interface at the tool end.
28. A robot according to any of the preceding items, wherein the robot is a seventh-joint robot, and the plurality of joints includes the first joint, the second joint, the third joint, the fourth joint, the fifth joint, the sixth joint and the seventh joint, wherein
   the first joint is positioned between the base end and the second joint,
   the second joint is positioned between the first joint and the third joint,
   the third joint is positioned between the second joint and the fourth joint,
   fourth joint is positioned between the third joint and the fifth joint,
   the sixth joint is positioned between the fifth joint and the seventh joint, and
   the seventh joint is positioned between the sixth joint and the tool end.
29. A robot according to any of the preceding items, wherein the robotic arm comprises a tool flange for connection with a tool arranged at the tool end of the robotic arm.
30. A robot according to any of the preceding items, wherein the robot comprises a base at the base end of the robotic arm, wherein the base is fixed to a structure to which the robot is to be fastened.
31. A robot according to any of the preceding items, wherein the base is further connected to the first joint.
32. A robot according to any of the preceding items, wherein the robotic arm comprises a first rigid member connecting the first joint with the second joint.
33. A robot according to any of the preceding items, wherein the robotic arm comprises a plurality of rigid members, including the base, the first rigid member and further including a second rigid member connecting the second joint with a third joint.
34. A robot according to any of the preceding items, wherein the plurality of rigid members further includes a third rigid member connecting the third joint with the fourth joint, a fourth rigid member connecting the fourth joint with the fifth joint, a fifth rigid member connecting the fifth joint with a sixth joint, a sixth rigid member connecting the sixth joint with the seventh joint.
35. A robot according to any of the preceding items, wherein the plurality of rigid members forms an external skin of the robotic arm.
36. A robot according to any of the preceding items, wherein the first circuitry is arranged within the first rigid member.
37. A robot according to any of the preceding items, wherein the second circuitry is arranged within the third rigid member and the third circuitry is arranged within the fifth rigid member and wherein the fourth circuitry, if present, is arranged within the sixth rigid member.
38. A robot according to any of the preceding items, wherein the second rigid member is longer than the first rigid member and the third rigid member.
39. A robot according to any of the preceding items, wherein the fourth rigid member is longer than the third rigid member, the fifth rigid member and the sixth rigid member.
40. A robot according to any of the preceding items, wherein the second and fourth rigid members each comprises a cylindrical extruded section.
41. A robot according to any of the preceding items, wherein the second and fourth rigid members further comprise a moulded section.
42. A robot according to any of the preceding items, wherein the first and third rigid members consist of a moulded section.
43. A robot according to any of the preceding items, wherein the robotic arm comprises a first access opening arranged in the external skin of the first rigid member, wherein the first access opening is configured to allow access to the first circuitry.
44. A robot according to any of the preceding items, wherein the robotic arm comprises a plurality of access openings including the first access opening and further including a second access opening arranged in the external skin of the third rigid member, wherein the second access opening is configured to allow access to the second circuitry.
45. A robot according to any of the preceding items, wherein the plurality of access openings further includes a third access opening arranged in the external skin of the fifth rigid member, wherein the third access opening is configured to allow access to the third circuitry.
46. A robot according to any of the preceding items, wherein the plurality of access openings further includes a fourth access opening arranged in the external skin of the seventh rigid member, wherein the fourth access opening is configured to allow access to the fourth circuitry.
47. A robot according to any of the preceding items,
   wherein the first motor assembly comprises a first output part and a first housing part, wherein
      - the first output part is connected to the first gear and comprises the first output end and means for connecting the first output part to a rigid member, and
      - the first housing part surrounds the first motor and the first gear and comprises the first housing end, and
   wherein the second motor assembly comprises a second output part and a second housing part, wherein
      - the second output part is connected to the second gear and comprises the second output end and means for connecting the second output part to a rigid member, and
      - the second housing part surrounds the second motor and the second gear and comprises the second housing end.
48. A robot according to any of the preceding items,
   wherein the third motor assembly comprises a third output part and a third housing part, wherein
      - the third output part is connected to the third gear and comprises the third output end and means for connecting the third output part to a rigid member, and
      - the third housing part surrounds the third motor and the third gear and comprises the third housing end, and
   wherein the fourth motor assembly comprises a fourth output part and a fourth housing part, wherein
      - the fourth output part is connected to the fourth gear and comprises the fourth output end and means for connecting the fourth output part to a rigid member, and
      - the fourth housing part surrounds the fourth motor and the fourth gear and comprises the fourth housing end, and
   wherein the fifth motor assembly comprises a fifth output part and a fifth housing part, wherein
      - the fifth output part is connected to the fifth gear and comprises the fifth output end and means for connecting the fifth output part to a rigid member, and
      - the fifth housing part surrounds the fifth motor and the fifth gear and comprises the fifth housing end, and
   wherein the sixth motor assembly comprises a sixth output part and a sixth housing part, wherein
      - the sixth output part is connected to the sixth gear and comprises the sixth output end and means for connecting the sixth output part to a rigid member, and
      - the sixth housing part surrounds the sixth motor and the sixth gear and comprises the sixth housing end, and
   wherein the seventh motor assembly comprises a seventh output part and a seventh housing part, wherein
      - the seventh output part is connected to the seventh gear and comprises the seventh output end and means for connecting the seventh output part to a rigid member, and
      - the seventh housing part surrounds the seventh motor and the seventh gear and comprises the seventh housing end.
49. A robot according to any of the preceding items, wherein the first motor assembly is configured to cause movement of the first joint with respect to the first axis by relative movement between the first output part and the first housing part, and wherein the second motor assembly is configured to cause movement of the second joint with respect to the second axis by relative movement between the second output part and the second housing part.
50. A robot according to any of the preceding items, wherein the third motor assembly is configured to cause movement of the third joint with respect to the third axis by relative movement between the third output part and the third housing part and/or wherein the fourth motor assembly is configured to cause movement of the fourth joint with respect to the fourth axis by relative movement between the fourth output part and the fourth housing part and/or wherein the fifth motor assembly is configured to cause movement of the fifth joint with respect to the fifth axis by relative movement between the fifth output part and the fifth housing part and/or wherein the sixth motor assembly is configured to cause movement of the sixth joint with respect to the sixth axis by relative movement between the sixth output part and the sixth housing part and/or wherein the seventh motor assembly is configured to cause movement of the seventh joint with respect to the seventh axis by relative movement between the seventh output part and the seventh housing part.
51. A robot according to any of the preceding items, wherein the first motor is arranged more proximal to the first housing end than the first gear and the first gear is arranged more proximal to the first output end than the first motor and/or wherein the second motor is arranged more proximal to the second housing end than the second gear and the second gear is arranged more proximal to the second output end than the second motor.
52. A robot according to any of the preceding items, wherein the third motor is arranged more proximal to the third housing end than the third gear and the third gear is arranged more proximal to the third output end than the third motor and/or wherein the fourth motor is arranged more proximal to the fourth housing end than the fourth gear and the fourth gear is arranged more proximal to the fourth output end than the fourth motor and/or wherein the fifth motor is arranged more proximal to the fifth housing end than the fifth gear and the fifth gear is arranged more proximal to the fifth output end than the fifth motor and/or wherein the sixth motor is arranged more proximal to the sixth housing end than the sixth gear and the sixth gear is arranged more proximal to the sixth output end than the sixth motor and/or wherein the seventh motor is arranged more proximal to the seventh housing end than the seventh gear and the seventh gear is arranged more proximal to the seventh output end than the seventh motor.
53. A robot according to any of the preceding items, wherein the first motor is arranged at the first housing end and the first gear is arranged at the first output end and/or wherein the second motor is arranged at the second housing end and the second gear is arranged at the second output end.
54. A robot according to any of the preceding items, wherein the third motor is arranged at the third housing end and the third gear is arranged at the third output end and/or wherein the fourth motor is arranged at the fourth housing end and the fourth gear is arranged at the fourth output end and/or wherein the fifth motor is arranged at the fifth housing end and the fifth gear is arranged at the fifth output end and/or wherein the sixth motor is arranged at the sixth housing end and the sixth gear is arranged at the sixth output end and/or wherein the seventh motor is arranged at the seventh housing end and the seventh gear is arranged at the seventh output end.
55. A robot according to any of the preceding items, wherein the first motor is not arranged at the first output end and the first gear is not arranged at the first housing end and/or wherein the second motor is not arranged at the second output end and the second gear is not arranged at the second housing end.
56. A robot according to any of the preceding items, wherein the third motor is not arranged at the third output end and the third gear is not arranged at the third housing end and/or wherein the fourth motor is not arranged at the fourth output end and the fourth gear is not arranged at the fourth housing end and/or wherein the fifth motor is not arranged at the fifth output end and the fifth gear is not arranged at the fifth housing end and/or wherein the sixth motor is not arranged at the sixth output end and the sixth gear is not arranged at the sixth housing end and/or wherein the seventh motor is not arranged at the seventh output end and the seventh gear is not arranged at the seventh housing end.
57. A robot according to any of the preceding items, wherein the first gear is arranged between the first circuitry and the first motor and/or wherein the second gear is arranged between the first circuitry and the second motor.
58. A robot according to any of the preceding items, wherein the third gear is arranged between the second circuitry and the third motor and/or wherein the fourth gear is arranged between the second circuitry and the fourth motor and/or wherein the fifth gear is arranged between the third circuitry and the fifth motor and/or wherein the sixth gear is arranged between the third circuitry and the sixth motor and/or wherein the seventh gear is arranged between the fourth circuitry and the seventh motor.
59. A robot according to any of the preceding items, wherein the first motor comprises a first hollow axle extending through the first motor forming part of the first passage, and wherein the second motor comprises a second hollow axle extending through the second motor forming part of the second passage.
60. A robot according to any of the preceding items, wherein the third motor comprises a third hollow axle extending through the third motor forming part of the third passage, and wherein the fourth motor comprises a fourth hollow axle extending through the fourth motor forming part of the fourth passage, and wherein the fifth motor comprises a fifth hollow axle extending through the fifth motor forming part of the fifth passage and wherein the sixth motor comprises a sixth hollow axle extending through the sixth motor forming part of the sixth passage and wherein the seventh motor comprises a seventh hollow axle extending through the seventh motor forming part of the seventh passage.
61. A robot according to any of the preceding items, wherein the first motor is connected to the first gear at least through the first hollow axle, and wherein the second motor is connected to the second gear at least through the second hollow axle.
62. A robot according to any of the preceding items, wherein the third motor is connected to the third gear at least through the third hollow axle and wherein the fourth motor is connected to the fourth gear at least through the fourth hollow axle and/or wherein the fifth motor is connected to the fifth gear at least through the fifth hollow axle and wherein the sixth motor is connected to the sixth gear at least through the sixth hollow axle and/or wherein the seventh motor is connected to the seventh gear at least through the seventh hollow axle.
63. A robot according to any of the preceding items, wherein the first output part comprises a first main bearing and wherein the second output part comprises a second main bearing.
64. A robot according to any of the preceding items, wherein the third output part comprises a third main bearing and/or wherein the fourth output part comprises a fourth main bearing and/or wherein the fifth output part comprises a fifth main bearing and/or wherein the sixth output part comprises a sixth main bearing and/or wherein the seventh output part comprises a seventh main bearing.
65. A robot according to any of the preceding items, wherein the first housing part is fixed to the base of the robotic arm and wherein the first output part is fixed to the first rigid member of the robotic arm such that relative movement between the first housing part and the first output part cause relative motion between the base and the first rigid member.
64. A robot according to any of the preceding items, wherein the second housing part is fixed to the second rigid member of the robotic arm and wherein the second output part is fixed to the first rigid member of the robotic arm, such that relative movement between the second housing part and the second output part cause relative motion between the first rigid member and the second rigid member.
65. A robot according to any of the preceding items, wherein the third housing part is fixed to the second rigid member of the robotic arm and wherein the third output part is fixed to the third rigid member of the robotic arm, such that relative movement between the third housing part and the third output part cause relative motion between the second rigid member and the third rigid member.
66. A robot according to any of the preceding items, wherein the fourth housing part is fixed to the fourth rigid member of the robotic arm and wherein the second output part is fixed to the third rigid member of the robotic arm such that relative movement between the fourth housing part and the fourth output part cause relative motion between the third rigid member and the fourth rigid member.
67. A robot according to any of the preceding items, wherein the fifth housing part is fixed to the fourth rigid member of the robotic arm and wherein the fifth output part is fixed to the sixth rigid member of the robotic arm such that relative movement between the fifth housing part and the fifth output part cause relative motion between the fourth rigid member and the fifth rigid member.
68. A robot according to any of the preceding items, wherein the sixth housing part is fixed to the sixth or seventh rigid member of the robotic arm, and wherein the sixth output part is fixed to the sixth or seventh rigid member of the robotic arm such that relative movement between the sixth housing part and the sixth output part cause relative motion between the sixth rigid member and the seventh rigid member.
69. A robot according to any of the preceding items, wherein the seventh housing part is fixed to the seventh rigid member of the robotic arm and wherein the seventh output part is fixed to the tool end of the robotic arm such that relative movement between the seventh housing part and the seventh output part cause relative motion between the seventh rigid member and the tool end of the robotic arm.
70. A robot according to any of the preceding items, wherein the robot further comprises a control unit being communicably connected to the plurality of circuitries and configured for controlling the robotic arm.
71. A robot according to any of the preceding items, wherein the control unit determines one or more operational parameters for the plurality of motor assemblies so as to let the robotic arm perform a desired movement or task, wherein the operational parameters include torque and/or angular velocity and/or angular acceleration for each of the plurality of motor assemblies.
72. A robot according to any of the preceding items, wherein the control unit are arranged within or forms part of the base of the robotic arm.

### LIST OF REFERENCES

1 structure
2 robot
3 robotic arm
4 base
6first joint
8 second joint
10 third joint
12 fourth joint
14 fifth joint
16 sixth joint
18 seventh joint
22 fastening bolts
30 base end
32 tool end
34 first rigid member
36 second rigid member
36a cylindrical section of second rigid member
36b moulded section of second rigid member
38 third rigid member
40 fourth rigid member
40a cylindrical section of fourth rigid member
40b moulded section of fourth rigid member
42 fifth rigid member
44 sixth rigid member
50 first motor assembly
51 first motor
52 first gear
53 first output end
54 first housing end
55 first hollow axle
56 first output part
57 first housing part
58 first wires
59 first passage
60 second motor assembly
61 second motor
62 second gear
63 second output end
64 second housing end
65 second hollow axle
66 second output part
67 second housing part
68 second wires
69 second passage
70 third motor assembly
71 third motor
72 third gear
73 third output end
74 third housing end
75 third hollow axle
76 third output part
77 third housing part
78 third wires
79 third passage
80 fourth motor assembly
81 fourth motor
82 fourth gear
83 fourth output end
84 fourth housing end
85 fourth hollow axle
86 fourth output part
87 fourth housing part
88 fourth wires
89 fourth passage
90 fifth motor assembly
91 fifth motor
92 fifth gear
93 fifth output end
94 fifth housing end
95 fifth hollow axle
96 fifth output part
97 fifth housing part
98 fifth wires
99 fifth passage
100 sixth motor assembly
101 sixth motor
102 sixth gear
103 sixth output end
104 sixth housing end
105 sixth hollow axle
106 sixth output part
107 sixth housing part
108 sixth wires
109 sixth passage
110 seventh motor assembly
111 seventh motor
112 seventh gear
113 seventh output end
114 seventh housing end
115 seventh hollow axle
116 seventh output part
117 seventh housing part
118 seventh wires
119 seventh passage
200 control unit
210 first circuitry
212 first processing unit
214 second processing unit
220 second circuitry
222 third processing unit
224 fourth processing unit
230 third circuitry
232 fifth processing unit
234 sixth processing unit
240 fourth circuitry
242 seventh processing unit
244 seventh processing unit
250 first access opening
251 second access opening
252 third access opening
253 fourth access opening
Ax1 first axis
Ax2 second axis
Ax3 third axis
Ax4 fourth axis
Ax5 fifth axis
Ax6 sixth axis
Ax7 seventh axis

## Claims

1. A robot (2) comprising a robotic arm (3) extending between a base end (30) and a tool end (32), the robotic arm (3) comprising:
a plurality of joints (6, 8, 10, 12, 14, 16, 18) including a first joint (6) and a second joint (8),
wherein the first joint (6) is positioned between the base end (30) and the second joint (8), and wherein the second joint (8) is positioned between the first joint (6) and the tool end (32),
a plurality of motor assemblies (50, 60, 70, 80, 90, 100, 110) including a first motor assembly (50) and a second motor assembly (60),
wherein the first motor assembly (50) extends along a first axis (Ax1) between a first output end (53) and a first housing end (54) and configured to cause movement of the first joint (6) with respect to the first axis (Ax1) by relative movement between the first output end (53) and the first housing end (54), and wherein the first motor assembly (50) comprises a first motor (51) connected to a first gear (52), and a first passage (59) extending from the first housing end (54) to the first output end (53) along the first axis (Ax1), and
wherein the second motor assembly (60) extends along a second axis (Ax2) between a second output end (63) and a second housing end (64) and configured to cause movement of the second joint (8) with respect to the second axis (Ax2) by relative movement between the second output end (63) and the second housing end (64), and wherein the second motor assembly (60) comprises a second motor (61) connected to a second gear (62), and
a number of circuitries (210, 220, 230, 240) including a first circuitry (210) for controlling the first and second motors (51, 61),
wherein the first circuitry (210) is arranged between the first joint (6) and the second joint (8) within the robotic arm (3), and
wherein the first circuitry (210) is connected to the first motor (51) by first wires (58) and to the second motor (61) by second wires (68), and
wherein the first motor assembly (50) is arranged with the first output end (53) towards the first circuitry (210), and wherein the first wires (58) extend through the first passage (59) of the first motor assembly (50).

2. A robot according to claim 1, wherein the second motor assembly (60) comprises a second passage (69) extending from the second housing end (63) to the second output end (64) along the second axis (Ax2) and wherein the second motor assembly (60) is arranged with the second output end (63) towards the first circuitry (210), and wherein the second wires (68) are extending through the second passage (69) of the second motor assembly (60).

3. A robot according to any of the preceding claims, wherein the first circuitry (210) is a PCB and comprises a first processing unit and a second processing unit, wherein the first processing unit is configured for controlling the first motor assembly (50) and the second processing unit is configured for controlling the second motor assembly (60).

4. A robot according to any of the preceding claims, wherein the robot (2) is a seventh-joint robot and the plurality of joints includes the first joint (6), a second joint (8), a third joint (10), a fourth joint (12), a fifth joint (14), a sixth joint (16) and a seventh joint (18), wherein:
the first joint (6) is positioned between the base (4) end and the second joint (8),
the second joint (8) is positioned between the first joint (6) and the third joint (10),
the third joint (10) is positioned between the second joint (8) and the fourth joint (12),
fourth joint (12) is positioned between the third joint (10) and the fifth joint (14),
fifth joint (14) is positioned between the fourth joint (12) and the sixth joint (16),
the sixth joint (16) is positioned between the fifth joint (14) and the seventh joint (18), and
the seventh joint (18) is positioned between the sixth joint (16) and the tool end (32).

5. A robot according to any of the preceding claims, wherein the robot (2) comprises a base (4) at the base end (30) of the robotic arm (3), wherein the base (4) is fixed to a structure (1) to which the robot is to be fastened, wherein the base (4) is further connected to the first joint (6) and wherein the robotic arm comprises a first rigid member (34) connecting the first joint (6) with the second joint (8).

6. A robot according to any of the preceding claims, wherein the first circuitry (210) is arranged within the first rigid member (34).

7. A robot according to any of the preceding claims, wherein the robotic arm (3) comprises a first access opening (250) arranged in the first rigid member (34), wherein the first access opening (250) is configured to allow access to the first circuitry (210).

8. A robot according to any of the preceding claims, wherein the first motor assembly (50) comprises a first output part (56) and a first housing part (57), wherein
- the first output part (56) is connected to the first gear (52) and comprises the first output end (53) and means for connecting the first output part (56) to a rigid member, and
- the first housing part (56) surrounds the first motor (51) and the first gear (52) and comprises the first housing end (54), and
wherein the second motor assembly (60) comprises a second output part (66) and a second housing part (67), wherein
- the second output part (66) is connected to the second gear (62) and comprises the second output end (63) and means for connecting the second output part (66) to a rigid member, and
- the second housing part (67) surrounds the second motor (61) and the second gear (62) and comprises the second housing end (64).

9. A robot according to any of the preceding claims, wherein the first motor assembly (50) is configured to cause movement of the first joint (6) with respect to the first axis (Ax1) by relative movement between the first output part (56) and the first housing part (57), and wherein the second motor assembly (60) is configured to cause movement of the second joint (8) with respect to the second axis (Ax2) by relative movement between the second output part (66) and the second housing part (67).

10. A robot according to any of the preceding claims, wherein the first motor (51) is arranged more proximal to the first housing end (54) than the first gear (52), and the first gear (52) is arranged more proximal to the first output end (53) than the first motor (51) and/or wherein the second motor (61) is arranged more proximal to the second housing end (63) than the second gear (62), and the second gear (62) is arranged more proximal to the second output end (63) than the second motor (61).

11. A robot according to any of the preceding claims, wherein the first motor (51) is arranged at the first housing end (54), and the first gear (52) is arranged at the first output end (53) and/or wherein the second motor (61) is arranged at the second housing end (64) and the second gear (62) is arranged at the second output end (63) and wherein the first motor (51) is not arranged at the first output end (53) and the first gear (52) is not arranged at the first housing end (54) and/or wherein the second motor (61) is not arranged at the second output end (63) and the second gear (62) is not arranged at the second housing end (64).

12. A robot according to any of the preceding claims, wherein the first gear (52) is arranged between the first circuitry (210) and the first motor (51) and/or wherein the second gear (62) is arranged between the first circuitry (210) and the second motor (61).

13. A robot according to any of the preceding claims, wherein the first motor (51) comprises a first hollow axle (55) extending through the first motor (51) forming part of the first passage (59), and wherein the second motor (61) comprises a second hollow axle (65) extending through the second motor (61) forming part of the second passage (69).

14. A robot according to any of the preceding claims, wherein the first housing part (57) is fixed to the base (4) of the robotic arm and wherein the first output part (56) is fixed to the first rigid member (34) of the robotic arm (3) such that relative movement between the first housing part (57) and the first output part (56) cause relative motion between the base (4) and the first rigid member (34).

15. A robot according to any of the preceding claims, wherein the robot (2) further comprises a control unit (200) being communicably connected to the number of circuitries (210, 220, 230, 240) and configured for controlling the robotic arm (3) and wherein the control unit (200) is arranged within or forms part of the base (4) of the robotic arm (3).
